(19) Europäisches Patentamt
European Patent Office
Office européen des brevets

(11) Publication number : **0 333 718 B1**

(12) # EUROPEAN PATENT SPECIFICATION

(45) Date of publication of patent specification : **03.06.92 Bulletin 92/23**

(51) Int. Cl.$^5$ : **H04B 3/23**

(21) Application number : **87906864.1**

(22) Date of filing : **16.09.87**

(86) International application number : **PCT/US87/02361**

(87) International publication number : **WO 88/02582 07.04.88 Gazette 88/08**

(54) **ECHO CANCELLER WITH ADAPTIVE DYNAMICALLY POSITIONED TAPS.**

(30) Priority : **01.10.86 US 913928**
**01.10.86 US 913929**

(43) Date of publication of application : **27.09.89 Bulletin 89/39**

(45) Publication of the grant of the patent : **03.06.92 Bulletin 92/23**

(84) Designated Contracting States : **DE FR GB NL**

(56) References cited :
**EP-A- 0 081 437**
**EP-A- 0 130 263**
**IBM Technical Disclosure Bulletin, vol. 21, no. 5, Oct. 1978, (New York, US); A. Desblache et al.: " Centering transversalequalizer tap coefficients", pages 1916-1918**

(56) References cited :
**IEEE Global Telecommunications Conference, Houston, Texas, 1-4 Dec. 1986, Conference record, vol. 3, IEEE, (New York, US); H.Chang et al.: "A DSP-based echocanceller with two adaptive filters", pages 1674-1678**

(73) Proprietor : **RACAL-DATACOM INC.**
**1601 North Harrison Parkway**
**Sunrise, Florida 33323 (US)**

(72) Inventor : **MARTINEZ, Aldo, A.**
**21420 S.W. 102 Avenue**
**Miami, FL 33189 (US)**
Inventor : **MILLER, Jerry, A.**
**8571 NW 21st Court**
**Sunrise, FL 33322 (US)**

(74) Representative : **Obee, Robert William et al**
**Racal Group Services Ltd. Group Legal Department Richmond Court 309 Fleet Road**
**Fleet, Hampshire GU13 8BU (GB)**

EP 0 333 718 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background

### 1. Field of the Invention

This invention relates generally to the field of adaptive transversal filters such as those used in echo cancellers and more particularly to an adaptive echo canceller having dynamically positioned adaptive filter taps and to a method for allocating and updating the positions of the taps.

### 2. Background of the Invention

Impedance mismatches and other circuit discontinuities in telephone lines often result in the presence of echoes on such lines. These mismatches generally occur at 2 wire to 4 wire and 4 wire to 2 wire transitions. Such echoes produce confusion in the case of voice communication and may cause data errors in the case of data communication if the echo is severe enough. This is of course undesirable in voice communications, but may be intolerable in data communication. In full duplex or even half duplex analog (modem) and digital data communications circuits, such echoes are interpreted by a receiver as noise which can corrupt incoming received signals causing reduced data throughput and/or data errors.

Such echo signals have been canceled in the prior art with echo cancellers such as that shown in FIG. 1. In this arrangement, which is similar to that presented in the Bell System Technical Journal, Vol. XLVI, Number 3, March 1967 entitled "An Adaptive Echo Canceller" by Shondi et al, a signal source 10 produces a digital signal which is converted to an analog signal by digital to analog converter 12 prior to application to a hybrid transformer circuit 14. Hybrid 14 is coupled to a two wire transmission line 16 which is also used to receive incoming signals which are applied to an analog to digital converter 18. The analog to digital converter 18 passes the received signals on to a receiver 20 for processing.

The remaining circuitry comprises an echo canceller which is in the form of a transversal filter (generally) which is placed between the transmit and receive paths as shown. The echo canceller includes a tapped delay line or shift register 24 coupled to the output of signal source 10. The shift register has periodic output taps which are coupled to a plurality of multipliers 28. The multipliers 28 are also coupled to a tap coefficient memory 32 which stores the tap weights or tap coefficients for the transversal filter. These tap weights may represent the impulse response of the transmission line 16. The outputs of the multipliers 28 are summed together at an adder 36 producing a replica of the echo signal returned by the transmission line in response to the transmitted signal from signal source 10. This, of course, assumes that the echo signal may be replicated by a weighted sum of delayed input signals from signal source 10. This echo replica is in the form of:

**Equation 1:** $$\hat{e} = \sum_{N=1}^{K} C_N \, X(NT)$$

Where:

N = a tap number
K = the number of taps in the echo canceller
T = the sampling interval
$C_N$ = tap weight at position N
$X_N$ = sample of output of signal source at tap N
$\hat{e}$ = echo replica.

This echo replica $\hat{e}$ is subtracted at subtracter 40 from the incoming signal at the output of the analog to digital converter 18 in order to cancel the echo signal so that only the transmitted signal plus noise and an error signal (from imperfect echo cancellation) remain as follows:

**Equation 2:** $$\hat{Y}(NT) = Y(NT) + n(NT) + e(NT) - \hat{e}(NT)$$
$$= Y(NT) + n(NT) + \varepsilon(NT)$$

Where:

Y = the desired transmitted signal

$\hat{Y}$ = the received signal after echo cancellation

n = noise

e = the echo signal

ε = the error between the echo replica and the actual echo.

Such echo signals (impulse responses) may take on many forms with the most common being that of a near end echo (resulting from discontinuities and mismatches at a local telephone office) plus far end echoes (resulting from such discontinuities or mismatches at remote telephone offices). An example of such echoes is shown in FIG. 2 where the near end echo is represented by echo 50 and the far end echo is represented by echo 52.

In the example of FIG. 2, near end echo 50 is shown to be approximately the same magnitude as echo 52. Another possibility is shown in FIG. 3 with an echo 60 representing the near end echo and a somewhat smaller echo 62 representing the far end echo. Of course, an unlimited number of other possible echo situations exist and those presented here are only presented by way of example.

One of the more common techniques for dealing with the combination of near end plus far end echoes is described in U.S. Patent No. 4,464,545 to Werner. This echo canceller structure utilizes a near end sub-canceller to cancel the near end echo and a far end sub-canceller to cancel to the far echo. The two sub-cancellers are separated by a bulk delay unit to account for the silent period of no echoes between the near end and far end echoes. This structure, in order to be optimally effective, requires knowledge of when in time an echo is likely to occur and how long each echo will last so that the length of the near end and far end echo canceller and the duration of the bulk delay may be established. Also, in the case of the echo of FIG. 3, computational noise may be generated by virtue of too many taps used to cancel the relatively small echo 62.

U.S. Patent No. 4,582,963 improves upon this echo canceller arrangement by allowing the bulk delay unit to be variable. In this patent, the variable bulk delay allows for varying distances between the local and remote offices so that the near end canceller and far end canceller can be more optimally situated in time to enhance the likelihood of good cancellation of both the near end and far end echoes.

Unfortunately, neither of the arrangements shown in the above-referenced patents can account for an echo signal such as that shown in FIG. 4. In this echo signal, a near end echo 70 is followed by an intermediate echo 72 which is then followed by a far end echo 74. According to published studies by Bell Telephone Laboratories, intermediate echoes occur in approximately 30% of all long distance connections. The echo cancellers of Werner and U.S. Patent No. 4,582,963 to Danstrom are unable to cope with such intermediate echoes thus, substantial corruption of data or voice signals may occur as a result.

A paper published at the I.C.A.S.S.P. 86 in Tokyo entitled "A Tap Selection Algorithm For Adaptive Filters", Kawamura et al., describes a tap adaption algorithm entitled "Scrub Taps Waiting In a Queue" or "STWQ" which may allow a digital adaptive filter to ultimately adapt to such an intermediate echo 22 as shown in FIG. 3. Unfortunately, such an algorithm has another drawback encountered by the two previously mentioned types of echo cancellers. Namely, that it is undesirable for an echo canceller to operate when there is no echo. Running an echo canceller under such circumstances merely creates computational noise as a result of finite word length accuracy in the digital transversal filter. This may actually hinder the reception of data in a marginal line. This paper also suggests that the canceller is best adapted from a random or evenly distributed initial allocation of the fixed number of taps which are allowed.

In EPO document number EP-A-0130263 to Desblache et al., an echo canceller locates a central echo sample by assuming that the sample of greatest amplitude is at the center of the echo. A predetermined number of coefficients on each side of this central sample is then assumed to adequately contain the significant echo energy.

In EPO document number EP-A-0081437 to Colin de Verdere et al., samples of an impulse response used in an echo canceller are updated only if they are non-zero. Non-zero samples are defined as those of value greater than or equal to a predetermined threshold.

The present invention provides a digital echo canceller structure which overcomes many of the drawbacks associated with conventional echo canceller structures.

## Summary of the Invention

It is therefore an object of the present invention to provide an improved echo canceller circuit which reduces computational noise when there is no echo to cancel.

It is another object of the present invention to provide an improved echo canceller structure which adapts readily to intermediate echoes.

It is a further object of the present invention to provide an improved echo canceller structure which readily adapts to many arbitrary echo responses.

It is another object of the present invention to provide a method and apparatus for allocating and adapting taps in an echo canceller structure having variable tap locations.

It is another object of the present invention to provide an echo canceller which dynamically allocates taps to provide near optimal utilization of a limited number of taps.

It is yet a further object of the present invention to provide an echo canceller structure whose variable tap locations may be rapidly selected without need for large numbers of time consuming mathematical operations while resulting in good echo cancellation and near optimum tap selection.

It is another object of the present invention to provide an echo canceller which reduces computational noise and readily adapts to changing transmission line characteristics.

These and other objects of the invention will become apparent to those skilled in the art upon consideration of the following description of the invention.

In one embodiment of the present invention, an echo canceller, for a transmission line, includes a shift register having an input for receiving an input signal from a signal source and having a plurality of output taps for providing a plurality of equally spaced delayed signals. A tap coefficient storage memory stores a plurality of tap coefficients. A multiplier multiplies certain of the delayed signals by certain tap coefficients to produce multiplier outputs. A tap allocation circuit determines, on a tap by tap basis, how many and which of the taps are to be turned on so that its corresponding tap coefficients are multiplied by the multiplier. A subtracter cancels echoes by subtracting the multiplier outputs from signals received on the transmission line. The tap allocator determines which and how many taps to turn on by determining which taps contribute significantly to the echo canceller's performance.

In another embodiment of the present invention an apparatus for allocating filter taps in an echo canceller for a transmission line, operates by storing a plurality of samples of signal representative of said transmission line's impulse response in a memory; examining each of the plurality of stored samples to determine if its magnitude is greater than a predetermined threshold; and assigning non-zero weighting values to only those taps of the echo canceller corresponding to samples greater in magnitude than the predetermined threshold.

In another embodiment of the present invention, an apparatus for allocating filter taps in an echo canceller for a transmission line operates by storing a plurality of samples of a signal representative of the transmission line's impulse response in a memory; examining the plurality of stored samples to find ranges of samples of the impulse response having echo energy; and allocating a variable number of filter taps of the echo canceller only to taps within the ranges of samples having echo energy.

In another embodiment of the present invention, an echo canceller includes a memory for storing an impulse response, the impulse response having echo energy. An echo canceller includes a digital filter having a plurality of weighted taps, each of the weighted taps having an associated tap weight value. A tap allocator activates and deactivating variable numbers of taps in response to the detecting circuit so that only taps within the ranges of samples are activated within the echo canceller.

The features of the invention believed to be novel are set forth with particularity in the appended claims. The invention itself however, both as to organization and method of operation, together with further objects and advantages thereof, may be best understood by reference to the following description taken in conjunction with the accompanying drawing.

Brief Description of the Drawing

FIG. 1 shows a prior art echo canceller structure.

FIG. 2 shows an echo response having near end and far end components of approximately equal energy.

FIG. 3 shows an echo response having a small near end component and a significantly larger far end component.

FIG. 4 shows an echo response or impulse response of a transmission line having near end, far end and intermediate echo energy.

FIG. 5 shows an enlarged portion of an echo signal illustrating the tap selection process of one embodiment of the present invention.

FIG. 6 shows a functional block diagram of the echo canceller of the present invention.

FIG. 7 shows a flow chart of a routine for initial allocation of echo canceller taps in the present invention.

FIG. 8 shows a flow chart of a routine used to select STANDBY taps in order to adapt the tap allocation of the present invention.

FIG. 9 shows a flow chart of a routine for dropping unneeded taps as part of an adaption process.

FIG. 10 shows a flow chart of the overall echo canceller operation including the process of turning on STANDBY taps.

FIG. 11 shows an echo response or impulse response of a transmission line having near end, far end and intermediate echo energy as well as a group of figures (B-J) which outline the tap selection process of the present invention.

FIG. 12 shows the structure of an embodiment of the echo canceller of the present invention in block diagram form.

FIG. 13 shows a functional block diagram of the tap allocator of one embodiment of the present invention.

FIG. 14 shows a flow chart of a routine for finding echoes in the present invention.

FIG. 15 shows a flow chart of a routine used to find multiple echoes in accordance with the present invention.

## Detailed Description of the Invention

Two approaches are given to the present problems. The first approach presented is referred to as the "tap-by-tap" approach. The second is referred to as the "tap region" approach.

### 1. Tap-by Tap Approach

The present embodiment of the invention invention ameliorates the above problems by allocating echo canceller taps on a tap-by-tap basis only to samples where there is actually a significant echo present. That is, the overall echo canceller structure resembles a conventional echo canceller having a very large tapped delay element. But, only certain individual taps or groups of taps are actually "turned ON" at any given time creating a "sparse" transversal filter structure in some instances. In general, it is likely that the majority of the taps will be "turned OFF". The present invention examines the impulse response of the line (which corresponds to tap weights for a transversal filter) as measured during a training period and allocates taps according to the location of significant echo energy is actually present on a tap by tap basis. The terms "tap weight" and "tap coefficient" are used interchangeably herein to mean the gain or weighting factor applied to each tap location sample by a multiplier.

To illustrate the principle of the present invention, the echo (transmission line impulse response) of FIG. 5 is used as an example. It is presumed that this echo signal is stored in memory and such storage may be effected by any of a number of known training techniques for echo cancellers. For example, an approximate impulse signal can be applied to the transmission line of interest and the echo signal measured in response to that impulse. This impulse response may then be used as the tap weights (either with or without windowing as desired) for a transversal filter structure according to the present invention. Other techniques are known in the art. After the impulse response is stored in memory, each of the tap weights are individually evaluated to determine whether or not it contributes significantly to the echo. Significant echo cancellation is determined by various factors including acceptable echo canceller performance (which varies significantly from application to application, e.g. voice requirements and high speed data communication requirements may be radically different) and available processing power. In the preferred embodiment, this is initially accomplished by comparing the magnitude (absolute value) each of the impulse response (tap weight) samples with a predetermined threshold and turning ON only those taps whose absolute value exceeds that threshold. The rest of the taps are kept "OFF" for purposes of echo cancellation (but their values may be retained in memory for possible future use).

In the example illustrated in FIG. 5, the threshold is shown in broken lines. Both positive and negative limits are shown but it will be appreciated that this is equivalent to a comparison of the impulse response's absolute value with a single positive threshold. It may also be desirable to equivalently use the square of the impulse response in some embodiments if it proves to be computationally efficient. In this example, a total of 25 taps (samples of the impulse response) are shown at equally spaced increments of time, but of course this is not to be limiting as many echo cancellers or similar devices will require a total of possibly hundreds of taps. In this simple example, the sampled echo energy exceeds the threshold at a total of 10 of the possible 25 taps. These taps are those which contribute most heavily to the echo problem and they are therefore selected to be canceled. The selected taps which are turned ON are: 1-4, 7-9 and 12-14. The remainder of the taps are left OFF (given zero weight) for purposes of cancellation of the echo. Thus, in this simple example, the computation power which would normally be used to operate a 25 tap canceller can be reduced substantially to that required for only a 10 tap canceller plus the overhead required to manage which taps are ON or OFF. In many instances, this can provide a substantial savings in computing power. In addition, the echo canceller itself is not generating unnecessary computational noise by attempting to cancel insignificant echo energy.

In this simple example, the echo estimate is given by the following relationship:

Equation 3

$$\hat{e} = \sum_{N=1}^{4} C_N X(NT) + \sum_{N=7}^{9} C_N X(NT) + \sum_{N=12}^{14} C_N X(NT)$$

This relationship may be generalized by Equation 4, which describes the function of the echo canceller of the present invention:

Equation 4 $$\sum_{N=F(N)}^{K} C_N X(NT)$$

Where:

F(N) is a sequence of integers corresponding to those taps which are to be turned ON.

This differs from the echo replica of equation 1 in that all tap weights having magnitude less than the threshold are ignored (approximated by zero). In practice, this will have little effect on the echo canceller's performance when a stable (not time varying) echo is being replicated for cancellation provided the threshold is appropriately selected so that significant taps are not turned OFF. The appropriate selection of the threshold may be made experimentally and may require variation based upon a typical type of echo present on a given line. As a starting point, a selection of approximately 5 to 15 percent of the peak value of the echo impulse response will yield adequate levels of echo cancellation in many circumstances since samples lower than this range generally do not contribute heavily to the echo. The exact selection of the threshold should be based upon the required level of echo cancellation with lower thresholds resulting in larger numbers of taps turned ON and smaller residual echo. In any event, the threshold should usually be set above the noise floor of the system and within the lower levels of digital quantization about zero, but this is not to be limiting.

An advantage of the present process for selection of taps to turn ON or OFF is that it requires very little computing power since all decisions are made based upon comparison operations rather than multiplication and divisions. Comparison operations typically take only several cycles to perform whereas multiplications and divisions frequently require tens or hundreds of clock cycles to perform. For example, for the Motorola® 68000 series microprocessor, a multiply operation takes approximately 70 cycles and a divide takes approximately 160 cycles. A compare, on the other hand, takes only about 10 cycles. Also, the reduced number of taps used to cancel the echo allows less computer power to be used for echo cancellation and for the adaption process of the ON taps. Since such cancellation and adaption typically involve numerous multiply, divide and numerical integration processes, those processes are also heavy users of computer time.

In order to cope with variations in the echo characteristics over time as a result of amplitude changes, phase roll, phase hits, phase jitter and in general changes in line characteristics, the present invention preferably utilizes an adaption scheme which allows not only for variation of tap weight values but also for variations in which taps are actually turned ON at any given time. This is accomplished by selecting a group of taps which are most likely to be required and placing those taps in a STANDBY status. In the event echo canceller performance degrades to a level approaching unacceptability, these STANDBY taps are switched ON and adapted according to normal adaption schemes (such as steepest descent) until the cancellation is once again acceptable. At this point, any unnecessary taps may be turned OFF (or to STANDBY). In addition, as part of normal adaption of taps which are turned ON, if their value falls below a threshold, they may be dropped since their contribution to the canceller's performance is then insignificant. The threshold at which taps may be dropped is preferably set at a level lower than that of initial tap selection. This provides a level of noise immunity by hysteresis and thereby prevents continual shifting in and out of marginal taps. This second level is preferably set at approximately 3 dB below that of the original threshold but this is not to be limiting as the level of hysteresis should be determined experimentally to provide an appropriate compromise. It is also preferable that an average be made of the tap value as it is adapted to provide a smooth function for comparison with the threshold. However, it is recognized that this may require additional computing power and may therefore be impractical in some circumstances.

In one embodiment of the present invention the process of selecting STANDBY taps is carried out by assuming that the most likely taps to be required as the line conditions change are those adjacent the taps which are ON. In the event of simple phase roll, jitter or shift, this is likely to be an accurate guess as to which taps will be required. In the example of FIG. 5, the taps which would be turned ON according to this guess are 5, 6, 10, 11 and 15. If, for example, a sudden phase shift to the right of one sampling period were encountered, turning ON all STANDBY taps would result in proper operation of the canceller after several adaption cycles. In this event, the tap status shown in Table 1 would result.

The STANDBY taps may either remain at their original value or some form of interpolation may be used to speed up adaption once the STANDBY taps are turned ON. In either event, the STANDBY taps are adapted until it can be determined which taps should properly remain ON. After this, unnecessary taps may be turned OFF (or STANDBY).

TABLE 1

| | ON TAPS | OFF TAPS | STANDBY TAPS |
|---|---|---|---|
| TAP STATUS AS ORIGINALLY SELECTED | 1-4<br>7-9<br>12-14 | 16-25 | 5,6,10,<br>11,15 |
| TAP STATUS AFTER ONE SAMPLE PERIOD PHASE SHIFT | 2-5<br>8-10<br>13-15 | 17-25 | 1,6,7,11,<br>12,16 |

In another embodiment, STANDBY taps are selected by examining the taps which are below the ON threshold (that is, OFF taps) and by comparing these taps with another threshold, for example 1/2 of the original tap selection threshold. In this example, the taps selected as STANDBY taps would be those between the ON threshold and the lower threshold so that the STANDBY taps would be given by Table 2.

TABLE 2

| ON TAPS | OFF TAPS | STANDBY TAPS |
|---|---|---|
| 1-4, 7-9, 12-14 | 6,11,15,16,20-25 | 5,10,17-19 |

If there is a maximum allowable number of ON taps (M), the OFF taps may be sorted and the largest OFF taps selected as STANDBY taps within the constraints of the maximum number of taps. It should be noted that STANDBY taps can become ON taps and should be selected such that M is greater than or equal to the ON taps plus the STANDBY taps.

In the preferred embodiment, a combination of the above methods is used so that the following taps are set to STANDBY initially in the example of FIG. 5: 5, 6, 10, 11, 15, 17-19. Except for radical changes in line characteristics, this selection of STANDBY taps provides good ability to adapt to variations. This is important to prevent interruption of data flow in a data communication environment due to continuing need for retraining of the echo canceller.

Turning now to FIG. 6, a functional block diagram is shown for the echo canceller of the present invention.

Of course it will be understood by those skilled in the art that the present invention is preferably implemented using microcomputer technology so that the bulk of the functional blocks of the echo canceller shown in FIG. 6 are actually implemented using a programmed microcomputer.

In FIG. 6, a signal source 110 which may be either a source of voice or data signals provides a digitized signal at its output to a digital to analog converter 112. Digital to analog converter 112 in turn provides an analog representation of the signal at the output of 110 to an input of hybrid 114. Hybrid 114 then applies the analog signal to a two wire transmission line 116. Incoming signals on transmission line 116 are provided to analog to digital converter 118 which passes the incoming signal on to a receiver 120 for further processing.

In the echo canceller of the present invention, represented by the remaining circuitry of FIG. 6, the digital signal at the output of 110 is also provided to a shift register or delay line 124 having a plurality of periodic output taps. Shift register 124 is preferably implemented using conventional random access memory (RAM). Each of these taps may be selectively applied to a plurality of multipliers 128 by appropriate opening or closure of switches 130. Switches 130 are open if the tap is OFF or on STANDBY and closed if the tap is ON. At a second input to multipliers 128, tap coefficients are provided to the multipliers from a tap coefficient memory 132. Those skilled in the art will recognize that it is desirable for multipliers 128 to completely cease functioning at those taps which are turned OFF or on STANDBY so that processing power of the computer implementing the multipliers is conserved.

The operation of multipliers 128 and switches 130 are controlled by status information for each tap coefficient which is stored in a tap status memory 134. Each of the outputs of multipliers 128 are summed together at adder 136 and the resultant sum is subtracted from the output of the analog to digital converter 118 at a subtracter 140.

In order to correctly adapt tap values and tap status, the output of subtracter 140 is processed by an error processor 142 which evaluates the performance of the echo canceller and provides information to a tap coefficient adapter 144. The error processor produces a figure of merit or "cost" function indicative of how well the echo canceller is performing. As is known in the art, it is the job of the adaption circuitry to minimize this "cost" function to achieve optimal error cancellation. In the present invention, this "cost" function is also used to appropriately adapt the tap locations to assure good cancellation. Tap coefficient adapter 144 adapts the values of those taps which are turned ON using any of a number of known tap adaption methods such as, for example, the steepest descent method or least mean square error method. Tap coefficient adapter 144 obtains information as to which taps are active from tap status memory 134 and receives inputs from error processor 142 and tap coefficient memory 132 in order to provide processing of each of the individual tap coefficients which are turned ON.

Error processor 142 also provides error information to a tap allocator 146 which is used to set the tap status in tap status memory 134 based upon the tap coefficient values stored in tap coefficient memory 132 as well as the information derived from error processing in error processor 142.

Turning now to FIG. 7 a flow chart of the initial tap selection process is given. Those skilled in the art will recognize that many variations of the flow chart of FIG. 7 are possible without departing from the spirit of the present invention. The routine described by the flow chart of FIG. 7 is entered at step 200 after which the status of all taps is initialized to OFF at step 202. At step 204, N (a counter indicative of the tap position) is set equal to 1 (first tap position). At step 206, the value of the tap at location N is compared with a predetermined threshold and if the absolute value of the tap coefficient at location N is greater than the predetermined threshold, control passes to step 208 where the tap status of tap N is set to ON. At step 210 is counter is incremented to count the number of taps that have been turned ON.

After step 210 the value of N is checked to determine if the last tap has been reached at step 212. Also, if the absolute value of the tap coefficient at location N is less than or equal to the threshold at step 206, control passes to 212. In step 212 if N is not equal to the maximum value (corresponding to the maximum possible number of taps of all status) then the number N is incremented by 1 in step 214 and control is passed back to step 206. If N reaches maximum at step 212 then control passes to decision block 215 where the number of taps which have been turned ON is inspected.. The present invention contemplates that it may be desirable to limit the maximum number of taps M which may be turned ON at any given time. If the number of taps which have been turned ON does not exceed the maximum allowable number of turned ON taps, control passes from step 215 to step 216 which ends the routine of FIG. 7. If on the other hand the maximum number of turned ON taps has been reached at step 215, control passes to step 220 where all of the taps which have been turned ON are sorted according to absolute value. This can be readily accomplished by any of a number of very rapid sorting routines such as the "Quicksort" algorithm. After the tap values have been sorted at step 220, the taps with the lowest absolute values are set to OFF at step 222. It is necessary in this step to turn OFF (the number of taps initially set ON) - (the maximum number of taps) in order to assure that no more than the allowed maximum number of taps is turned ON.

After the required number of taps are turned OFF in step 222, the routine is exited at step 216. It will be appreciated by those skilled in the art that if the maximum number of taps has been allocated as ON taps then there is no room for allowing any STANDBY taps as previously discussed. However, the maximum number of taps which can possibly be allocated as ON should preferably be set at a high enough level to combat the worst possible echo situation which can normally be encountered. If echoes degrade beyond this point then it may be advisable to either retrain the echo canceller or to effect repairs of the communication's channel so as to permanently reduce the undesirable echoes on the transmission line.

It will normally be the case that far fewer taps are required to actually cancel the echo than are available to the echo canceller as ON taps. Therefore, it is contemplated that the ability to turn ON the STANDBY taps, as previously discussed, to account for changes in the impulse response of the line will generally be possible. Therefore, the flow chart of FIG. 8 shows the general mechanism for setting STANDBY taps; but, for simplicity of illustration FIG. 8, does not account for situations wherein only a limited number of STANDBY taps (or total number of ON taps) are allowed. Those skilled in the art will understand that several ways of accounting for this condition may be utilized. For example, the STANDBY taps may be prioritized and only the maximum allowed number shifted in as an attempt to regain control over echoes. In another embodiment, processing power normally used for other purposes may be diverted to the echo canceller until adequate cancellation is obtained. Alternatively, if the line's echo performance is so poor as to require virtually all available taps at all times, retraining of the echo canceller in accordance with the flow chart of FIG. 7 or effecting repairs to the line may be better alternatives.

Turning now to FIG. 8, this flow chart describes the process by which STANDBY taps are selected. The routine is entered at step 250 after which all STANDBY taps are reinitialized to the OFF status at step 252. N is set equal to 1 at 254 and control passes to decision block 256. At step 256, the status of tap N is inspected and if the tap is OFF, control passes to step 258, then where the tap's value is inspected and compared with a threshold somewhat lower than that of FIG. 7. If the tap is greater than that threshold, the tap is set to STANDBY at step 260 and control passes to step 264. If the absolute value of the tap is less than or equal to the threshold in step 258 then control passes directly to step 264 bypassing step 260. If the last tap has been inspected at step 264 the routine terminates at step 270; otherwise, the tap counter N is incremented at step 272 and control passes back to step 256. If at step 256 the tap status is ON, control passes to step 274 where it is determined whether or not the tap counter is equal to 1. If not, the previous tap is inspected at step 276 and if the previous tap's status is OFF, then the status of the previous tap is set to STANDBY at 280 after which control passes to step 282. If the previous tap is not OFF at step 276 control passes directed to step 282 bypassing step 280. Similarly if N equals 1 at step 274, steps 276 and 280 are bypassed (to avoid checking non-existent tap number 1-1) and control passes directly to 282.

At step 282 the tap counter is inspected to determine if the last tap has been encountered and if so the routine is exited at step 270. Otherwise, control passes to step 284 where the next tap (N + 1) is inspected for purposes of determining its status. If the status of the next tap is OFF, then the status of the next tap is set to STANDBY at 286 and control passes from 286 directly to 272 where the tap counter is incremented. If the tap status of N + 1 is not OFF and step 284 control passes directly to the tap counter incrementing step 272.

The routine of FIG. 8 incorporates both the process of selecting taps adjacent ON taps as STANDBY taps as well as selecting higher valued OFF taps as STANDBY taps. Those skilled in the art will recognize that either or both of these techniques as well as possibly others may be utilized to select taps for STANDBY which may be good guesses as to which taps may be needed in the event that echo conditions change on the line. It is also conceivable that in some instances there is adequate processing power available to simply set all OFF taps to STANDBY so that a guess is not required. It may also be possible to simply select as many taps as possible or random or predetermined fixed locations (eg. equally spaced throughout the canceller) and achieve adequate recovery from changes in line conditions. Those skilled in the art will appreciate that greater likelihood of convergence and recovery from line changes exists as the number of STANDBY taps turned ON increases. Therefore, in the case of a maximum number of ON or STANDBY taps, the maximum number should preferably be used, thus allowing maximum likelihood of recovery from line changes. The routine shown in FIG. 8 or it's substitute should preferably be performed periodically after tap adaption to assure that there is a reliable set of STANDBY taps to engage in the event of line condition changes.

Turning now to FIG. 9, the tap adaption routine for ON taps is shown. This routine is entered in step 300 and N is set to 1 at 302. At step 304 the tap status is inspected for the Nth tap to determine if the tap is ON. If so, conventional tap adaption is performed on that tap at step 308. Those skilled in the art will appreciate that many techniques are available for performing tap adaption and a thorough discussion of those techniques is available in the art. At step 310 (which is an optional step) the adapted tap value is averaged with several previous tap values to obtain an average tap value (TAPAVE). At step 312 the absolute value of this average tap value is compared with a threshold somewhat lower than that of FIG. 7 and which may be equal to that of FIG.

8. If the adapted tap value average has fallen below this lower threshold at step 312 the tap's status is set to OFF at 314 and control is passed to 318. If on the other hand the absolute value of the average tap value is greater than or equal to this lower threshold at step 312, step 314 is bypassed and control is passed directly from 312 to 318. At 318 the tap counter is inspected to determine if the last tap has been processed. If so, the routine is exited at 320. Otherwise, the tap counter is incremented at 322 and control is passed back to step 304.

Turning now to FIG. 10, a flow chart of the general operation of the entire echo canceller is described. At step 350 power is turned ON and any initialization is performed. At step 352 the echo canceller is trained by transmitting a test pulse down the transmission line and measuring the echo response. Those skilled in the art will recognize that other ways of initializing or training an echo canceller are also possible. Control passes from step 352 to 354 where normal echo cancellation is performed on the received signals. Error measurement is performed at step 358 and if at step 360 the error performance is unacceptable, control passes back to step 352 where the echo canceller is retrained. It may be desirable to sound an alarm if this occurs. If echo performance is not unacceptable at 360, control passes to step 362 where it is determined whether or not the error is too large (although not unacceptable). This may be done by comparing the error performance with a predetermined error threshold. If the error is too large at step 362 the STANDBY taps are turned ON at step 364 and control passes to step 368. If the error is not too large, at step 362, control passes directly to step 368 bypassing step 364.

At step 368 tap adaption takes place for the ON taps (including any STANDBY taps turned ON) and control is passed to step 370. At step 370 it is determined whether or not the ON, OFF or STANDBY status of any taps changed by virtue of adaption at step 368. If so, control passes from 370 to 374 where the tap status is updated. After updating the tap status, control passes back to step 354 where normal cancellation once again takes place. If the status of taps is not changed in step 370, control passes directly from 370 to 354.

In effect, tap allocator 146 operates by bypassing any multiplication operations which would be normally be performed on a particular tap. In effect, this means that multiplications which would ordinarily be carried out if the echo canceller of FIG. 4 were operating in a conventional manner are not actually carried out. In this manner, noise generated by computational inaccuracies and finite number accuracies are not passed on to the receiver, and computer power is available for other purposes. Conceptually, however, tap allocator 146 may also be thought of as setting the tap value at a particular location to zero. The net result of the present invention is that the echo canceller will operate as though it includes several bulk delay elements separating distinct echo canceller subsystems made up of single taps or groups of taps allocated in regions corresponding to areas of significant echo energy.

It should be noted that although the present invention preferably turns OFF multiplication in order to turn OFF a tap, equivalently a tap coefficient may be set equal to zero in order to turn OFF the tap at the expense of computing power. Other equivalents may be possible and are within the scope of this invention.

The present invention has been simulated on an IBM® XT personal computer using Borland Internationa1® Turbo Pascal® version 3.01. The three listings that follow, while not optimal and possibly unsuitable for real time applications, are instructive as to the implementation of the present invention on a general purpose processor. Of course, although compiled Pascal is relatively fast in execution time, it is contemplated that commercial real time applications will more advantageously use assembly language routines written for a high speed signal processing microcomputer to enhance processer performance.

Listing 1 shows a Pascal procedure for initial allocation of tap positions. The first FOR statement compares each tap value in an array (Tap) to a threshold (Thresh) and assigns a status of ON or OFF to each tap. The variable TapStatus[N] is a typed variable array having allowed values of ON, OFF and STBY. The second and third FOR statements inspect each tap in the array and assign STANDBY status to OFF taps which are adjacent ON taps. The final FOR statement inspects each tap coefficient which is OFF to a lower threshold (LowThresh) and places any taps above this threshold in the STANDBY status. No provision was made in this routine for compensating in the event that a minimum number of ON or STANDBY taps were exceeded but those skilled in the art will readily understand how to make such modifications. Also, as is evident from the fact that this routine uses four successive loops to perform it's task, no attempt has been made to optimize execution speed. Those skilled in the art will understand that this is computationally inefficient in that merger of loops will operate faster. For simulation purposes, however, this procedure is acceptable.

Listing 2 is a procedure for updating the taps after adaption. This procedure initially turns all STANDBY taps to OFF in the first FOR statement. The subsequent statements are similar to the last 3 statements of Listing 1.

Listing 3 is a procedure for inactivating taps which have dropped below a lower threshold during adaption so that they are no longer significant. No provision is made in this procedure for integrating or averaging the tap values for noise immunity. This step is readily accommodated if desired.

In the preferred embodiment, this invention is implemented using a programmed general purpose microcomputer. The Texas Instruments® TMS 320 family of digital signal processors may be especially well suited for implementing the present invention since these computers are especially well adapted to real time digital signal processing. However, the savings in computation afforded by this invention may provide more important advantages when other processors which are not so well adapted to digital signal processing are used since a reduced number of multiplies and divides are used. Those skilled in the art will recognize that other implementations including analog equivalents and dedicated LSI circuitry may also be used in place of general purpose

LISTING 1

```
Procedure Allocate;
(Procedure for initial allocation of taps.  This procedure allows for any
number of taps to be on.)
{         N=counter
          Maxarray=Maximum number of total taps
          Tap=value of tap coefficient
          TapStatus=status of tap (ON, OFF, STBY)
          Thresh=tap turn on threshold
          LowThresh=standby threshold
}
Begin
      For N:=1 to MaxArray Do If Abs(Tap [N] > Thresh then
TapStatus[N]:                    =On else tapstatus[N]:=OFF;
      For N:2 to MaxArray do If (TapStatus[N]=ON>and (TapStatus[N-
          1]=OFF then tapstatus[N-1]:=STBY;
      For N:=1 to (MaxArray-1) do if (TapStatus[N]=ON> and
          (TapStatus[N+1]=OFF) then TapStatus[N+1]:=STBY;
          For N:1 to Maxarray do if (TapStatus[N]=OFF) and
          (abs(Tap[N])<LowThresh) then Tapstatus[N]:= STBY;
End
```

LISTING 2

```
Procedure Update
{     updates tap status after adaption.  This procedure allows for any
number of taps to be on.)
Begin
      For N:=1 to Maxarray do If TapStatus[N]=STBY then
TapStatus(N):=OFF;
      For N:=2 to Maxarray do If (TapStatus[N]=ON) and (TapStatus[N-
1]=OFF) then TapStatus[N-1]:=STBY;
```

```
        For N:=1 to MaxArray Do If (TapStatus[N]=OFF) and
(Abs(Tap[N])>LowThresh) then TapStatus[N]:=STBY;
End;
```

LISTING 3

```
Procedure DropTap;
{Procedure for dropping small valued taps)
{       LowThresh=Tap drow Threshold }
Begin
        For N:=1 to MaxArray Do
        Begin
            If (abs(Tap[N]) < LowThresh) and (TapStatus[N]=ON) then
            If (abs(tap [N]) < LowThresh) and (TapStatus[N]=ON) then
TapStatus[N]:=OFF:
        End;
End;
--------------------------------------------------------------------------------
```

processors. It will also be apparent that the present echo canceller may be implemented in either baseband or passband versions, as is known in the art, without departing from-the spirit of the invention.

The present invention therefore provides a mechanism for allocating echo canceller taps only in regions where they are required for actual cancellation of echo energy. As such, unnecessary computational noise is avoided, processor power is conserved and intermediate or unusual echoes are readily handled with the same hardware that is utilized to cancel more conventional echo signals. In addition, tap selection is very rapid by virtue of use of comparison steps rather than more time consuming multiplies and divides.

2 - TAP REGION APPROACH

To illustrate the principle of the present embodiment of the invention, the echo of FIG. 11A is used as an example. The echo contains a near end component 420, an intermediate component 422 and a far end component 424. It is presumed, for purposes of illustration, that this echo signal is already stored in memory and this may be effected by any of a number of known techniques. For example, an approximate impulse signal can be applied to the transmission line of interest and the echo signal stored as it is received. This stored impulse response may then be used as the tap weights (either with or without windowing as desired) for a transversal filter structure according the present invention. In the preferred embodiment, a pulse is used to sound the line and the echo (impulse response) is stored in a block of memory. This stored impulse response can then be analyzed to determine where significant blocks of echo energy are located. Since the modem is being trained at this time, plenty of processor power is available for locating the echo energy as follows.

According to the present invention, an estimate of the average power in the waveform is computed sample by sample and when a predetermined average power threshold is exceeded as shown in FIG. 11B at time T2 a start flag is set. The power calculation is continued until time T5 when the average power drops below a second threshold indicating that the end of the echo signal has been passed (due to the inertia of the average power estimate). It should be noted that because an estimate of the average energy is being measured, time T2 always occurs after the start of the echo and time T5 always occurs after the end of the echo. At this point it known that the entire echo lies somewhere between times T0 and T5 as shown in FIG. 11C. Thus, the echo signal has been coarsely located.

In order to refine the approximate location of the echo, the present invention utilizes a computation of the equivalent of the center of gravity of waveform 420 in order to locate the center of the echo. The center of gravity is computed using the following equation:

$$G(n)=\frac{\sum_{k=1}^{K} k\,|h(k)|^2}{1+\sum_{k=1}^{K}|h(k)|^2} \qquad \textbf{EQUATION 1}$$

Where:

n = the echo index
G(n) = center of gravity associated with $n^{th}$ echo
K = number of samples over which computation is performed
k = the sample index
h = impulse response signal

This computation is done over the entire range of samples shown in FIG. 11C (T0 to T5).

It should be carefully noted that although the waveform shown in FIG. 11A appears to be a continuous waveform, according to the preferred embodiment the present invention utilizes periodic digitized samples of the waveform of FIG. 11A so that the above calculation may be readily effected.

The computation of center of gravity G(n) locates the center of waveform 420 about which the energy is approximately equally distributed. This center in this example is approximately at time T3. Next it is desirable to determine the extent of the spread of the energy of echo 420. This accomplished by computation of a measure of the spread of the waveform equivalent to the radius of gyration of the energy of the waveform 420. This calculation uses the following equation:

$$R(n)=\frac{\sum_{k=1}^{K} [k-G(n)]^2\,|h(k)|^2}{1+\sum_{k=1}^{K}|h(k)|^2} \qquad \textbf{EQUATION 2}$$

When the radius of gyration R(n) is computed, it can be utilized to determine the range about the center of gravity which contains the echo signal. It has generally been determined that most of the echo energy lies between 2.5 and 3.5 times the radius of gyration about the center of gravity. In the preferred embodiment, the radius of gyration is multiplied by approximately 3 to determined the extent of the echo, but this is not to be limiting. The actual factor is a parameter which may be selected to achieve a desired level of echo cancellation with larger factors resulting in a larger time range of echo energy to be canceled. Multiplication of the radius of gyration by larger factors results in a higher level of echo cancellation at the expense of allocation of a greater number of taps. In the present example, computation of the radius of gyration R(n) and center of gravity G(n) results in a center of gravity at approximately T3 with three times the radius of gyration lying at time T1 and T4 as shown in FIG. 11D. Therefore, time T1 marks the start of echo 420 and time T4 marks the end of echo 420 for purposes of allocating taps in the present echo canceller. Therefore, any samples in the echo canceller occurring between time T1 and T4 of the impulse response should be turned on and allocated with appropriate tap weights according to the characteristics of echo 420. A tap is considered to be turned on if it is actually used as a multiplying factor in the transversal filtering process (equivalently, the tap weight may be set exactly to zero).

After the first echo response 420 has been located, the present invention then begins searching for a second echo response as shown in FIG. 11E. The process is essentially the same as that outlined previously and may be effected using the same algorithm as previously. The search begins at time T4 (the end of the first echo) and proceeds until time T7 where the average energy exceeds the first predetermined threshold. At time T10 the average energy drops below the second predetermined threshold so that the second echo response 422 is now coarsely located between times T4 and T10 as depicted in FIG. 11F. The same operation as was carried out in conjunction with the first echo now takes place for the second echo 422. In this case, the center of gravity G(n) and radius of gyration R(n) computations are carried out from the offset time at T4 all the way through time T10 where the average energy of the echo was determined to have dropped below the second predetermined threshold. The results of these calculations are shown in FIG. 11G wherein the center of gravity of waveform 422 is at time T8 and the radius of gyration computation results in a distribution of echo energy from approximately T6 to approximately T9. As before, this is obtained by multiplying the radius of gyration by a factor of three.

The far end echo 424 is similarly found by measuring the average power as shown in FIG. 11H until the power exceeds the first predetermined threshold at time T12. When the average power drops below the second predetermined threshold at time T15, the echo has been coarsely located as shown in FIG. 11I. In this case the center of gravity and radius of gyration calculations are carried out from T9 to T15 as shown in FIG. 11I. With echo 24 the resulting center of gravity is approximately at T13 with three times the radius of gyration resulting in end points for echo 24 at T11 and T14. Although not shown in FIG. 11, at time T14, the search for a fourth echo may be instituted by measuring the average energy of the waveform of FIG. 11A until time T16 which corresponds to the longest conceivable echo signal in this example. Even more echoes can be canceled given sufficient computation power.

A subroutine written in Fortran IV and implemented on a VAX minicomputer is shown in Listing 4 as an example of the implementation of a routine for finding an individual echo. Of course it will be appreciated by those skilled in the art that the present invention is more desirably implemented on a significantly smaller scale machine such as a microcomputer forming a part of a data modem. It is therefore contemplated that the present invention will be more desirably implemented in a lower level language such as assembly language for a powerful microcomputer such as the Texas Instruments TMS 320C-25 and similar advanced microcomputers so that rapid allocation of taps can be effected. This processor family is particularly well suited to real time digital signal processing. Alternatively, the present invention may be implemented using several less powerful microcomputers. Since the present invention is implemented largely during a training period during which time the modem adapts itself to a particular set of line conditions, the computing power utilized in computing the center of gravity and radius of gyration as previously described as well as the average power computations may be desirably calculated utilizing computing power which may be allocated (after the training period) to implementing the echo canceller itself and or other desired features of the modem of the preferred embodiment.

The following symbols are used in the ECHOFIND subroutine:

| | |
|---|---|
| NF | Power Detected Flag |
| NFP | Power Present Flag |
| TH1 | First (Higher) Power Detector Threshold |
| TH2 | Second (Lower) Power Detector Threshold |
| E | Accumulated Energy |

---

LISTING 4

---

```
SUBROUTINE ECHOFIND(NOFST,NEND,CGRV,RGR,NTP1,NTP2)

!      This subroutine searches a specified array for energy.  Once the
!      energy containing segment of the array is located, the center of
!      gravity and radius of gyration of the energy distribution are
!      calculated.

!      The samples in the array are complex valued.  All calculations
!      are carried out in terms of the square of the magnitude of the
!                   samples.  In the event that the whole array is
       searched and no energy is detected, the subroutine returns with
       CGRV and RGR holding zero value and NTP2=NEND.
!
```

```
!   Inputs:
!
!   NOFST:                          Pointer to the starting address of
                     the array to be
! searched for energy.
!
!   NEND:            End of array.
!
!   HR(), HI ():                                          Real,
                              imaginary parts of the elements of the
!                             array.

!   ALPHA:                          Time constant for the integrator
                     in the average
!                             power detector.

!   TH1, TH2:        Energy detector off-on, on-off thresholds, resp.

!   Outputs:

!   CGRV:            Center of gravity of the energy distribution.

!   RGR:                          Radius of gyration.

!   NTP1,  NTP2:                    Start, end addresses of array
                     segment for which
!                             the average power detector was on.

!   Initialization:

        REAL HMAG (1024)
        COMMON HR (1024), ALPHA, TH1, TH2
        E=0
        PAVG=0
        CPRM=0
        N=1
        NF-0
        NFP=0
        TH=TH1
        NTP1=0
        NTP2=0
20      K=N+NOFST
        IF(K GE NEND) GOTO 70
        HMAG(N)=HR(K)*HR(K)+HI(K)*HI(K)
        PAVG=ALPHA*PAVG+(1.0-ALPHA)*HMAG(N)
        IF(PAVG LT TH) GOTO 30    !ENERGY FLAG ON
        F=1                       !SWITCH THRESHOLD
        TH=TH2
        IF(NFP GT 0) GOTO 40
        NFP=1
        NTP1=K                    !First sample w/energy.
40      N=N+1
        GOTO 20
```

```
30      NF=0
        IF (NFP NE 1) GOTO 40
50      NTP2=K
!       Calculate GCRV, RGR
!       ______________________________
        E=0
        CGRV=0
        DO 55 I=1, NTP2-NOFST
        E=E+HMAG(I)
55      CGRV=CGRV+FLOAT(I)*HMAG(I)
        CGRV-CGRV/E
        RGR=0
        DO 60 I=1, NTP2-NOFST
        R=(FLOAT(I)-CGRV)**2
60      RGR=RGR+R*HMAG(I)
        RGR=RGR/E
        RETURN
!       Get here if end of array was reached
!       ______________________________
70      IF (NTP1 GT 0) GOTO 50     !Compute CG, R if energy.
!       Get here if no energy was found
!       ______________________________
        CGRV=0
        RGR=0
        NTP2=NEND
        RETURN
        END
```

Turning now to FIG. 12, an overall block diagram of the echo canceller of the present invention is shown. Those skilled in the art will recognize that many variations of the present invention may be possible. FIG. 11 shows a symbol generator 430 which is coupled through transmit filters 431 to a hybrid 432 which combines transmitted signals with received signals on transmission line 434. The receive path supplies the received signal from hybrid 432 to a receive filter 435 which in turn passes the signal on to receiver 436 (through a portion of the echo canceller). The output of transmitter 430 is also applied to the echo canceller of the present invention which includes a sample memory 438. This sample memory 438 may be conceptualized as a group of shift registers having predetermined delay coupled in series or as a tapped delay line.

Sample memory 438 should have an adequate number of storage locations to store enough samples of input signal to span an entire echo response. Sample memory may be implemented in any of a number of possible ways including use of a shift register, a tapped delay line or a portion of a computer's random access memory (RAM). By way of example, in a 9,600 baud modem operating with a sampling rate of 7200 hertz over telephone lines with a conventional 300 to 3400 hertz bandwidth approximately 8 to 10 thousand words of random access memory should be reserved for sample memory 438 in order to allow for the maximum echo duration. The outputs of sample memory 438 are provided to a group of multipliers 440 including one multiplier for each time delay associated with sample memory 438. Each of the multipliers of 40 multiplies a (preferably digitized) sample of the transmitted signal by a tap weight stored in a tap memory 442. Tap memory 442 should initially be of similar length as memory 438 but depending upon the allocation of taps, some of or in fact all of tap memory 442 may be freed up for other uses in the modem depending on the extent of the echo problem. Each of the multiplied outputs of the multipliers 440 are summed together in a summation block 444 prior to being subtracted from the incoming received signal at 446.

In the preferred embodiment the tap weights of the active taps stored in tap memory 442 are preferably adapted continually to provide near optimum echo cancellation by a tap adapter 448. Tap adapter 448 may operate in accordance with any known tap adaption technique such as the well known steepest descent technique for tap adaption. Other tap adaption algorithms may occur to those skilled in the art.

According to the present invention, many of the taps will be turned off by tap allocator 450 according to the technique previously discussed. In effect, tap allocator 450 operates by bypassing any multiplication operations which would be normally be performed on a particular tap. In effect, this means that multiplications which would ordinarily be carried out if the echo canceller of FIG. 12 were operating in a conventional manner are not actually carried out. In this manner, noise generated by computational inaccuracies and finite number accuracies are not passed on to the receiver. Also, savings in computational effort are obtained since the steps of multiplication and adding for turned off taps are conserved. Conceptually, however, tap allocator 450 may also be thought of as setting the tap value a particular location to zero. The net result of the present invention is that the echo canceller will operate as though it includes several dynamically allocated bulk delay elements separating distinct dynamically allocated echo canceller subsystems made up of contiguous groups of taps allocated in ranges of samples corresponding to areas of significant detected echo energy.

Turning now to FIG. 13, a more detailed diagram of the tap allocator of the present invention is shown. In FIG. 13 an echo signal is received as an input to the receiver front end 452 which includes the moderm's line interface circuits, equalizers, amplifiers, filters, etc. The received signal is then sampled and converted to digital form at a sampling analog to digital converter 454. The output of sampling analog to digital converter 454 is applied to a phase splitter 456 which separates the incoming echo signal into real and imaginary parts and stores the echo signal in complex double precision form in memory 442. The received echo signal as will be appreciated by those skilled in the art, is preferably obtained by sounding out the transmission channel by application of an impulse or by other techniques known in the art.

Once the entire impulse response is stored in memory 442, the echo samples are sequentially removed and applied to a squaring circuit 458 which computes the magnitude squared of the complex echo samples. The output of the squaring circuit 458 is applied to the power averaging circuit 60 which estimates the average power by multiplying the squared signal from 58 by one minus alpha at 462 and applies that signal to an adder 464. The output of adder 464 is passed through a delay 466 prior to multiplication by alpha at 468. The output of 468 is applied back to adder 464. The output of adder 464 represents an estimate of the average power of the echo signal which is then applied to one input of a comparator 470.

Averaging circuit 460 is actually a single pole IIR filter in the preferred embodiment which provides an adequate estimate of the average power for purposes of the present invention. Alpha (∞) is a design parameter which influences the reaction time of the energy detector and may be adjusted experimentally to obtain the desired performance. The comparator 470 compares the average power to a first threshold from threshold set 472. This first threshold has a relatively high value. When the estimated echo energy or power exceeds this first threshold at 470, the output of comparator 470 toggles and is inverted at invert 474 and then applied to one end of an AND gate 476. The output of comparator 470 is also passed through a delay 478 and then applied to a second output of AND gate 476. When the estimated average power of the echo signal exceeds the first threshold, the output of AND gate 476 toggles indicating to a center of gravity and radius of gyration computer 480 that a signal of significant energy has been located. When the output of comparator 470 toggles the threshold set circuit 472 modifies the threshold to a lower value thereby causing hysteresis to be implemented so that momentary dips in average power will be ignored until such average power clearly dips below the second predetermined threshold. When this second predetermined threshold is passed the start signal at the output of AND gate 476 is inverted indicating to the center of gravity and radius of gyration computer 480 that the end of a region of significant echo energy has been found.

The output of squaring circuit 458 is also provided to center of gravity and radius of gyration computer 480 in order to simplify the calculation of these quantities. Once the computer 480 calculates the center of gravity in radius of gyration and determines which taps are appropriately turned off and which are appropriately retained and this information is fed back to 442 for later use in canceling the echo signals. This may be accomplished prior to the phase splitter 456 once the tap values and tap locations are determined as is known in the art.

As previously discussed, the ECHOFIND routine of Listing 4 may be utilized to implement a portion of the present invention which finds the location of the echo signal. This routine is also described by the flow chart shown in FIG. 14 which starts at entry point 500. The variables listed in the flow chart of FIG. 14 are identical in definition to those of Table 1 and are defined in the comment section thereof. After entry point 500 an initialization is carried out at step 502 in preparation of finding the echo signal. After initialization at 502 control is passed to step 504 which corresponds to line 20 of subroutine ECHOFIND in which K is set to equal N + NOFFST. After step 504 control is passed to decision block 506 which tests the value of K to determine if it is greater than NEND. If K is not greater NEND, control is passed to step 508 in which the magnitude square and average power are computed.

The average power computation utilizes an integration time constant alpha which may be refined in value experimentally. In the preferred embodiment, it is approximately equal to 0.1, but this is not to be limiting. After step 508, control is passed to a decision block 510 which tests to determine if the average power is less than the threshold. If not, control passes to step 512 which sets NF equal to 1 and TH equal to TH2. Control then passes from block 512 to decision block 514 which checks to determine whether or not NFP is equal to 0. If it is, control passes to block 516 which sets NFP = 1 and NTP1 = K. Control then passes from 516 to step 518 which corresponds to line 40 of the ECHOFIND subroutine. At step 518 N is incremented by 1 and control passes back up to step 504.

If K is greater than NEND (indicating that the end of memory has been reached) at decision block 506 control passes to decision block 512 which corresponds to line 70 of subroutine ECHOFIND. Decision block 520 determines whether or not NTP1 is greater than zero (that is whether or not energy was present in the last segment scanned). If it is not greater than zero (no energy), control passes to block 522 which sets the center of gravity and radius of gyration equal to zero and sets NTP2 equal to NEND. The subroutine then returns at return block 524. If NTP1 is greater than zero at step 520, control passes to step 526 which corresponds to line 50 of subroutine echo find which sets NTP2 equal to K,computes the center of gravity, and computes the radius of gyration before passing control to return block 524.

If the average power is less than the threshold at step 510 then control passes to block 530 which corresponds to line 30 of subroutine echo find. In block 530 NF is set equal to zero and control is passed to decision block 532 which tests the value of NFP. If NFP is equal to one, control is passed to block 526. If NFP is not equal to one, control is passed to block 518.

This routine can be used to find a single contiguous range of samples containing substantial echo energy within a group of samples. It can be repeatedly called until all samples have been evaluated. Turning now to FIG. 15, a flow chart is shown which uses the routine of FIG. 14 to find a plurality of echo signals having substantial energy. The routine of FIG. 15 begins at entry point 600 and then control is passed to step 602 which initializes NOFF to equal zero (start of array), NTAP equal to zero and the echo counter J to equal 1. Control then passes from step 602 to decision block 604 which compares NTAP with NMAX (to determine if all available taps have been used up). If NTAP is not greater than NMAX, control is passed to step 606 which calls the subroutine ECHOFIND as described in table 1 or in flow chart of FIG. 14. After ECHOFIND has returned, control passes to decision 608 which checks to see if the center of gravity is equal to zero (no energy). If not, the following calculations are carried out at step 610:

| | |
|---|---|
| CG RAV(J) | = CG |
| RGYR(J) | = R |
| NON(J) | = N1 |
| NOFF(J) | = N2 |
| NT1(J) | = NOFF + (GG-K1.R) (Address of first tap allocated to $J^{th}$ echo) |
| NT2(J) | = NOFF + (CG + K1.R) (Address of last tap allocated to $J^{th}$ echo) |
| NT(J) | = NT2(J) - NT 1 (J) (Total number of taps allocated to $J^{the}$ echo) |
| NTAP | = NTAP + NT(J) (running sum of used taps). |

K1 is the scale factor for R and is preferably approximately 3.

Control then passes from block 610 to decision block 612 which compares NT2(J) with NSAMP. If is not greater than NSAMP then control passes to block 614 where J is incremented by 1 and NOFF is set equal to NOFF plus NT2(J). Control then passes from block 614 back to block 604. If at step 612, NTP(J) is greater than NSAMP (note that total memory = NSAMP and NMAX may be lower than NSAMP due to quiet periods of insignificant echo) then control is passed to block 616 where NECH is set equal to J-1. After block 616 the routine is exited at 618. Block 616 may also be entered via decision blocks 600 or 606 if NTAP is greater than NMAX or if CG equals zero respectively.

The present invention therefore provides a mechanism for allocating contiguous groups of echo canceller taps only in regions where they are required for actual cancellation of echo energy. As such, unnecessary computational noise is avoided, processor power is conserved and intermediate or unusual echoes are readily handled with the same hardware that is utilized to cancel more conventional echo signals. Of course, many variations are possible without departing from the present invention. For example, comparison of the estimate of average energy taken over a range of samples can be used as the sole selection criterion for active taps with the advantage of less computation to find the taps but generally requiring more active taps to accomodate. Other methods of finding ranges of samples containing echo energy will occur to those skilled in the art.

Thus it is apparent that in accordance with the present invention an apparatus that fully satisfies the objectives, aims and advantages is set forth above. While the invention has been described in conjunction with a specific embodiment, it is evident that many alternatives, modifications and variations will become apparent to those skilled in the art in light of the foregoing description.

## Claims

1. An echo canceller for a transmission line (116) having shift register means (124) having an input for receiving an input signal from a signal source and having a plurality of output taps for providing a plurality of equally spaced delayed signals; tap coefficient storage means (132) for storing a plurality of tap coefficients; tap adapting means (144) for adapting the values of said plurality of tap coefficients; multiplying means (128) for multiplying certain of said delayed signals by certain of said tap coefficients to produce multiplier outputs; canceling means (140) for canceling echoes by subtracting said multiplier outputs from signals received on said transmission line (116); characterized by: tap allocation means (146) for determining how many and which of said taps are to be turned ON so that its corresponding tap coefficient is multiplied by said multiplying means and a tap status memory (134) for storing ON or OFF status information regarding each of said taps.

2. The echo canceller of claim 1, wherein said tap adapting means (144) also adjusts said status information in said tap status memory (134).

3. The echo canceller of claim 1, wherein said tap allocation means (146) determines which of said taps are to be turned ON by determining which of said tap coefficients exceed a predetermined threshold in absolute value.

4. The echo canceller of claim 1, wherein said tap allocation means (146) allows no more than a predetermined maximum number M of taps to be ON and wherein the M taps with the largest absolute value are turned ON by said tap allocation means (146).

5. The echo canceller of claim 1, wherein said tap allocation means (146) further includes STANDBY tap allocating means for placing certain of said turned OFF taps in a STANDBY status so that STANDBY status taps may be turned ON if needed to adapt to changes in transmission line characteristics.

6. The echo canceller of claim 1, wherein said tap allocation means (146) further includes:

means for storing an impulse response in a memory (442), said impulse response being indicative of the characteristics of a transmission line;

means (480) for detecting ranges of samples within said impulse response having echo energy;

means (146) for activating and deactivating variable numbers of said taps in response to said detecting means so that only taps within said ranges of samples are activated within said echo canceller.

7. The echo canceller of claim 1, further incjuding windowing means for adjusting said tap coefficients by windowing said tap coefficients.

8. The echo canceller of claim 6, wherein said detecting means (480) includes means for computing the center of gravity of said ranges of samples.

9. The echo canceller of claim 8, wherein said tap allocation means (450) includes means for activating a plurality of taps within a predetermined multiple of radius of gyrations about said center of gravity of said ranges of samples.

10. The echo canceller of claim 9, wherein said tap allocation means (450) includes means for activating taps within 2.5 to 3.5 radii of gyration about said center of gravity of said ranges of samples.

11. The echo canceller of claim 1, wherein said tap allocation means includes:

means (460) for estimating average power of said echo;

means (470) for comparing said estimated average power with a predetermined threshold to coarsely locate ranges of samples containing echo energy;

means (480) for computing the center of gravity of said ranges of samples;

means(480) for computing the radius of gyration about said center of gravity; and

means (450) for activating echo canceller taps within a predetermined number of radii of gyration about said center of gravity.

## Revendications

1. Atténuateur d'écho destiné à une ligne de transmission (116) ayant un dispositif à registre à décalage (124) ayant une entrée destinée à recevoir un signal d'entrée d'une source de signaux et ayant plusieurs prises de sortie destinées à transmettre plusieurs signaux retardés régulièrement espacés, une mémoire (132) de coefficients de prise destinée à conserver plusieurs coefficients de prise, un dispositif (144) d'adaptation des valeurs des coefficients de prise, un dispositif multiplicateur (128) destiné à multiplier certains des signaux retardés par certains des coefficients de prise en formant des signaux de sortie de circuits multiplicateurs, et un dispositif atténuateur (140) destiné à atténuer les échos par soustraction des signaux de sortie des circuits multiplicateurs des signaux reçus par la ligne de transmission (116), caractérisé par un dispositif (146) d'affectation de prises destiné à déterminer combien de prises et quelles prises doivent être mises en fonctionnement de manière que le coefficient correspondant de prise soit multiplié par le dispositif multiplicateur, et une mémoire (134) d'états de prises destinée à conserver une information d'état en fonctionnement ou hors de fonctionnement concernant chacune des prises.

2. Atténuateur d'écho selon la revendication 1, dans lequel le dispositif (144) d'adaptation de prises ajuste aussi l'information d'état dans la mémoire (134) d'états de prises.

3. Atténuateur d'écho selon la revendication 1, dans lequel le dispositif (146) d'affectation de prises détermine quelles prises doivent être mises en fonctionnement par détermination des positions de prises qui dépassent un seuil prédéterminé, en valeur absolue.

4. Atténuateur d'écho selon la revendication 1, dans lequel le dispositif (146) d'affectation de prises permet la mise d'un nombre maximal prédéterminé (M) de prises à l'état de fonctionnement, et M prises ayant la plus grande valeur absolue sont mises en fonctionnement par le dispositif (146) d'affectation de prises.

5. Atténuateur d'écho selon la revendication 1, dans lequel le dispositif (146) d'affection de prises comprend en outre un dispositif d'affectation de prises en attente destiné à placer certaines des prises hors de fonctionnement à un état d'attente de manière que les prises à un état d'attente puissent être mises en fonctionnement le cas échéant pour l'adaptation au changement des caractéristiques de la ligne de transmission.

6. Atténuateur d'écho selon la revendication 1, dans lequel le dispositif (146) d'affectation des prises comporte en outre :

un dispositif destiné à mémoriser une réponse impulsionnelle dans une mémoire (442), la réponse impulsionnelle étant représentative des caractéristiques d'une ligne de transmission,

un dispositif (480) de détection des plages d'échantillons comprises dans la réponse impulsionnelle et ayant une énergie d'écho, et

un dispositif (146) destiné à activer et désactiver des nombres variables de prises en fonction du dispositif de détection afin que seules des prises comprises dans des plages d'échantillons soient activées dans l'atténuateur d'écho.

7. Atténuateur d'écho selon la revendication 1, comprenant en outre un dispositif de fenêtrage destiné à ajuster les coefficients des prises par fenêtrage des coefficients de prise.

8. Atténuateur d'écho selon la revendication 6, dans lequel le dispositif de détection (480) comporte un dispositif de calcul du centre de gravité des plages d'échantillons.

9. Atténuateur d'écho selon la revendication 8, dans lequel le dispositif (450) d'affection des prises comporte un dispositif destiné à activer plusieurs prises dans un multiple prédéterminé du rayon de giration autour du centre de gravité des plages d'échantillons.

10. Atténuateur d'écho selon la revendication 9, dans lequel le dispositif (450) d'affectation des prises comporte un dispositif d'activation des prises comprise entre 2,5 et 3,5 rayons de giration autour du centre de gravité des plages d'échantillons.

11. Atténuateur d'écho selon la revendication 1, dans lequel le dispositif d'affectation des prises comprend :

un dispositif (460) d'estimation de la puissance moyenne de l'écho,

un dispositif (470) de comparaison de la puissance moyenne estimée à un seuil prédéterminé afin que les plages d'échantillon contenant de l'énergie de l'écho soient localisées grossièrement,

un dispositif (480) de calcul du centre de gravité des plages d'échantillons,

un dispositif (480) de calcul du rayon de giration autour du centre de gravité, et

un dispositif (450) d'activation des prises de l'atténuateur d'écho pour un nombre prédéterminé de rayons de giration autour du centre de gravité.

## Patentansprüche

Echolöschstufe für eine Übertragungsleitung (116), welche besteht aus Schieberegistermitteln ( 124) mit einem Eingang zum Empfang eines Eingangssignals von einer Signalquelle und einer Vielzahl von Ausgangsstufen zur Erzeugung einer Vielzahl von abstandsgleichen verzögerten Signalen, stufenkoeffizienten Speichermitteln (132) zur Speicherung einer Vielzahl von Stufenkoeffizienten, Stufenanpassungsmitteln (144) zur Anpassung der Werte der Vielzahl der Stufenkoeffizienten, Multipliziermittel (128) zum Multiplizieren von bestimmten verzögerten Signalen mit bestimmten Stufenkoeffizienten zur Erzeugung von Multiplizierausgängen, Löschmitteln (140) zur Echolöschung durch Subtraktion der Multiplizierausgänge von von der Übertragungsleitung (116) empfangenen Signalen, gekennzeichnet durch Stufenzuordnungsmittel (146) zur Betimmung wievel und welche der Stufen einzuschalten sind, so daß ihr entsprechender Stufenkoefficient durch die Multipliziermittel multipliziert wird und durch einen Stufenzustandsspeicher (134) zur Speicherung der EIN- und AUS-Zustandsinformationen, jede der Stufen betreffend.

2. Echolöschstufe nach Anspruch 1, bei der die Stufenanpassungsmittel (144) auch die Statusinformation in dem Stufenzustandsspeicher (134) einstellt.

3. Echolöschstufe nach Anspruch 1, bei der die Stufenzuordnungsmittel (146) bestimmen, welche der Stufen einzuschalten sind, durch Bestimmten, welche der Stufenkoeffizienten einen vorbestimmten Schwellwert als Absolutwert übersteigt.

4. Echolöschstufe nach Anspruch 1, bei der die Stufenzuordnungsmittel (146) nicht mehr als eine vorbestimmte Maximalzahl M von einzuschaltenden Stufen erlaubt und bei welcher die M-Stufen mit dem größten Absolutwert von den Stufenzuordnuingsmitteln (146) eingeschaltet werden.

5. Echolöschstufe nach Anspruch 1, bei der die Stufenzuordnungsmittel (146) weiterhin STANDBY- Stufenzuordnungsmittel zur Plazierung bestimmter ausgeschalteter Stufen in einem STANDBY-Zustand umfassen, so daß die STANDBY- Zustandsstufen falls nötig eingeschaltet werden können, um Anderungen der Übertragungsleitungseigenschaften anzupassen.

6. Echolöschstufe nach Anspruch 1, bei der die Stufenzuordnungsmittel (146) weiterhin umfassen:

Mittel zur Speicherung einer Impulsantwort in einem Speicher (442), wobei die Impulsantwort für die Eigenschaften der Übertragungsleitung indikativ ist,

Mittel (480) zum Erfassen des Bereichs der Abfragewerte innerhalb der Impulsantwort, die eine Echoenergie aufweisen,

Mittel (146) zum Aktivieren und Deaktivieren einer variable, Anzahl von Stufen in Abhängigkeit der Erfassungsmittel, so daß lediglich Stufen innerhalb des Bereichs der Abfragewerte innerhalb der Echolöschstufe aktiviert werden.

7. Echolöschstufe nach Anspruch 1, bei der weiterhin Fenstermittel zum Einstellen der Stufenkoeffizienten durch Eingrenzen der Stufenkoeffizienten vorgesehen sind.

8. Echolöschstufe nach Anspruch 6, bei der die Erfassungsmittel (480) Mittel zum Errechnen des Schwerpunkts des Bereichs der Abfragewerte umfassen.

9. Echolöschstufe nach Anspruch 8, bei der die Stufenzuordnungsmittel (450) Mittel zum Aktivieren einer Vielzahl von Stufen innerhalb eines bestimmten Mehrfachen des Drehungsradius um den Schwerpunkt des Bereichs der Abfragewerte umfassen.

10. Echolöschtufe nach Anspruch 9, bei der die Stufenzuordnungsmittel (450) Mittel zum Aktivieren von Stufen innerhalb von 2,5 bis 3,5 Drehungsradien um den Schwerpunkt des Bereichs der Abfragewerte umfassen.

11. Echolöschstufe nach Anspruch 1, bei der die Stufenzuordnungsmittel umfassen:

Mittel (460) zum Abschätzen der mittleren Energie des Echos,

Mittel (470) zum Vergleich der geschätzten mittleren Energie mit einem bestimmten Schwellwert zum groben Bestimmen des Bereichs der Abfragewerte, die eine Echoenergie enthalten,

Mittel (480) zum Errechnen des Schwerpunkts des Bereichs der Abfragewerte,

Mittel (480) zum Errechnen des Drehungsradius um den Schwerpunkt,

Mittel (480) zum Atitivieren von Echolöschstufen innerhalb einer bestimmten Anzahl von Drehungsradien um den Schwerpunkt.

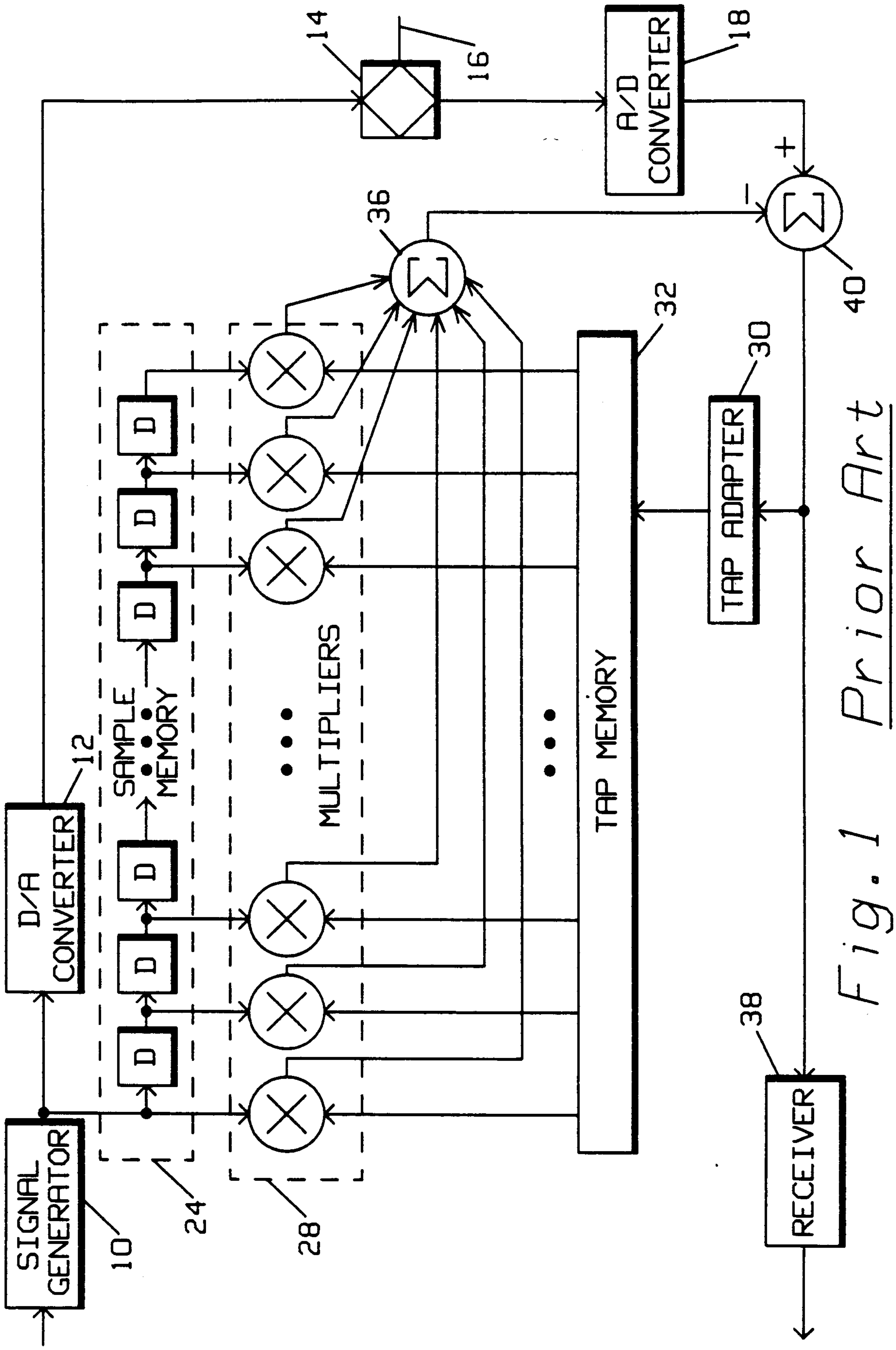


Fig. 1 Prior Art

Fig. 2

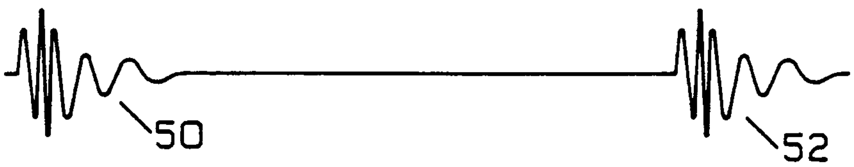


Fig. 3

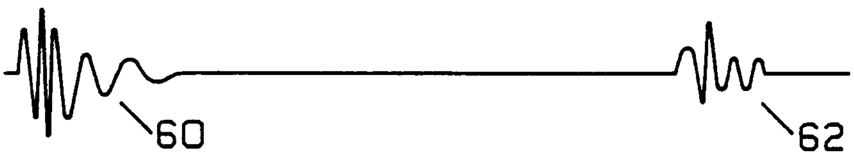


Fig. 4

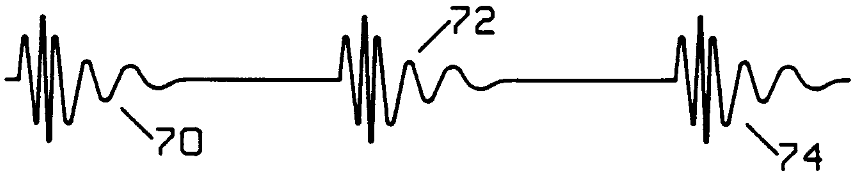


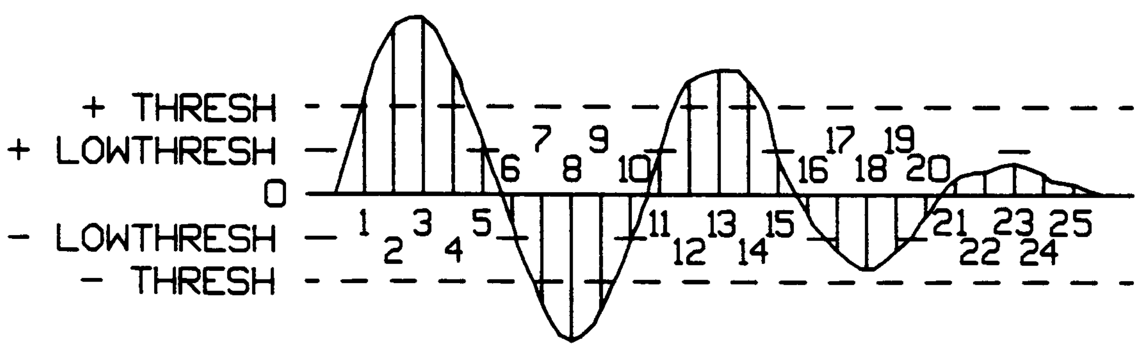


Fig. 5

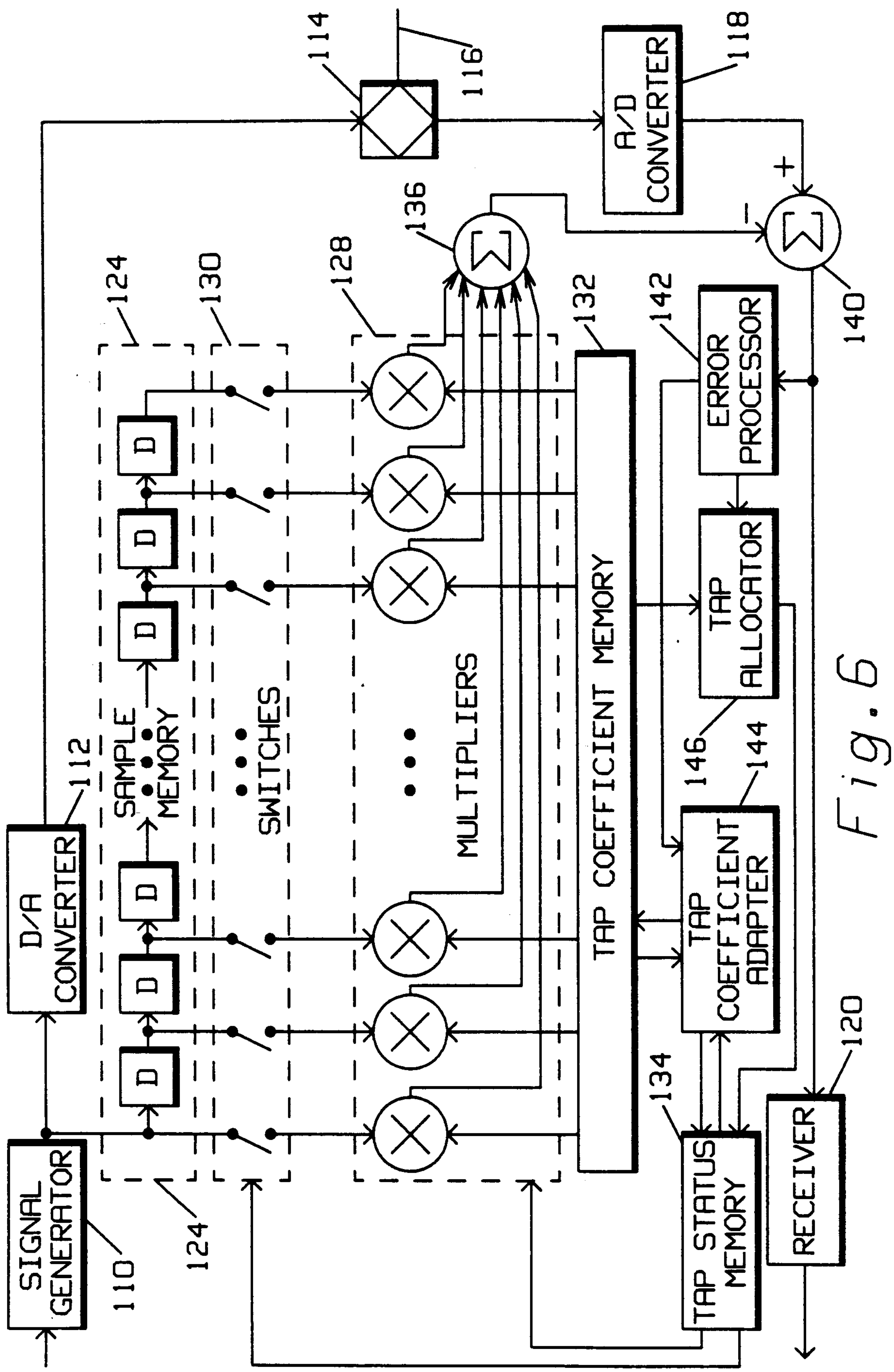
SIGNAL GENERATOR
110
D/A CONVERTER
112
114
116
A/D CONVERTER
118
SAMPLE MEMORY
124
D
SWITCHES
130
MULTIPLIERS
128
136
TAP COEFFICIENT MEMORY
132
ERROR PROCESSOR
142
TAP ALLOCATOR
146
TAP COEFFICIENT ADAPTER
144
TAP STATUS MEMORY
134
RECEIVER
120
140
+
-

Fig. 6

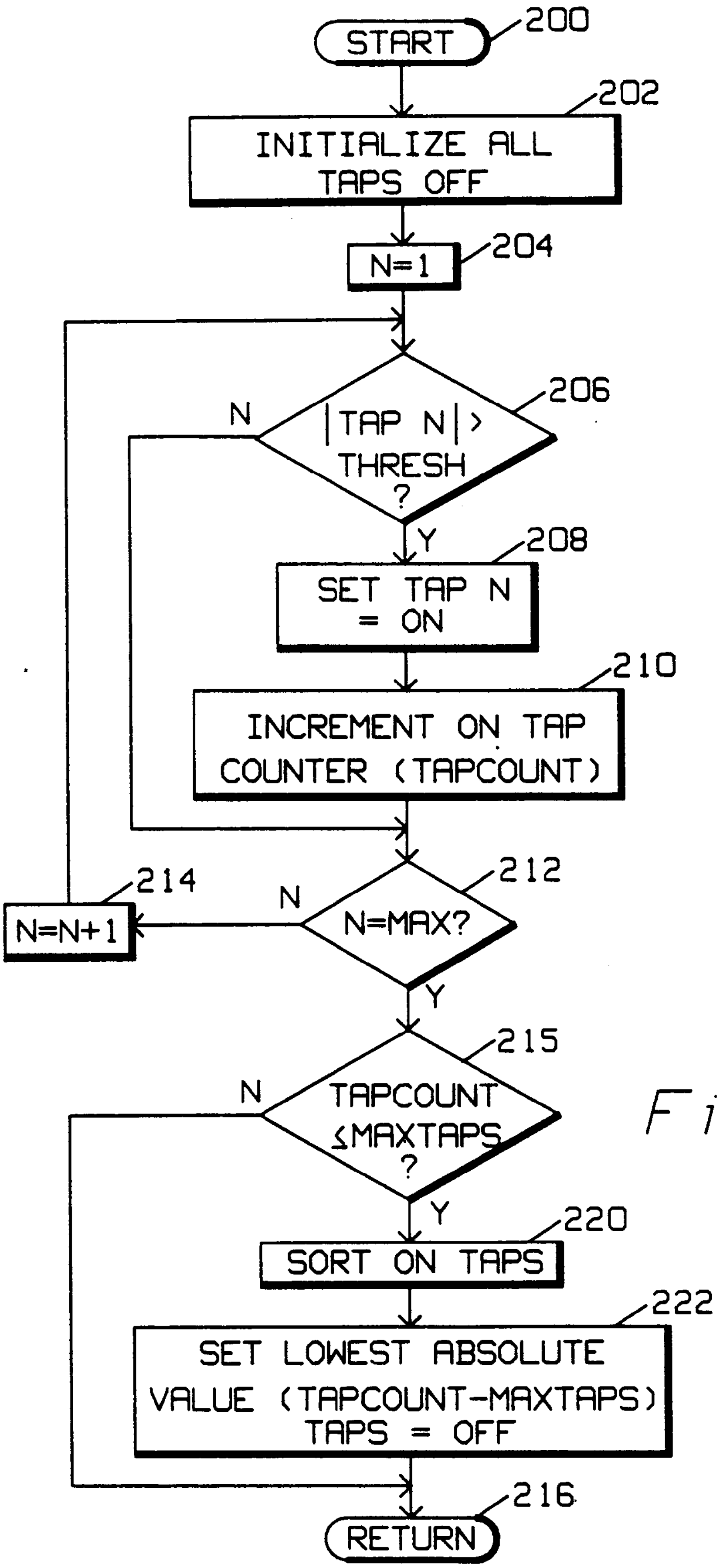
START
200
INITIALIZE ALL TAPS OFF
202
N=1
204
\|TAP N\| > THRESH ?
206
N
Y
SET TAP N = ON
208
INCREMENT ON TAP COUNTER (TAPCOUNT)
210
N=MAX?
212
N
Y
N=N+1
214
TAPCOUNT ≤MAXTAPS ?
215
N
Y
SORT ON TAPS
220
SET LOWEST ABSOLUTE VALUE (TAPCOUNT-MAXTAPS) TAPS = OFF
222
RETURN
216

Fig. 7

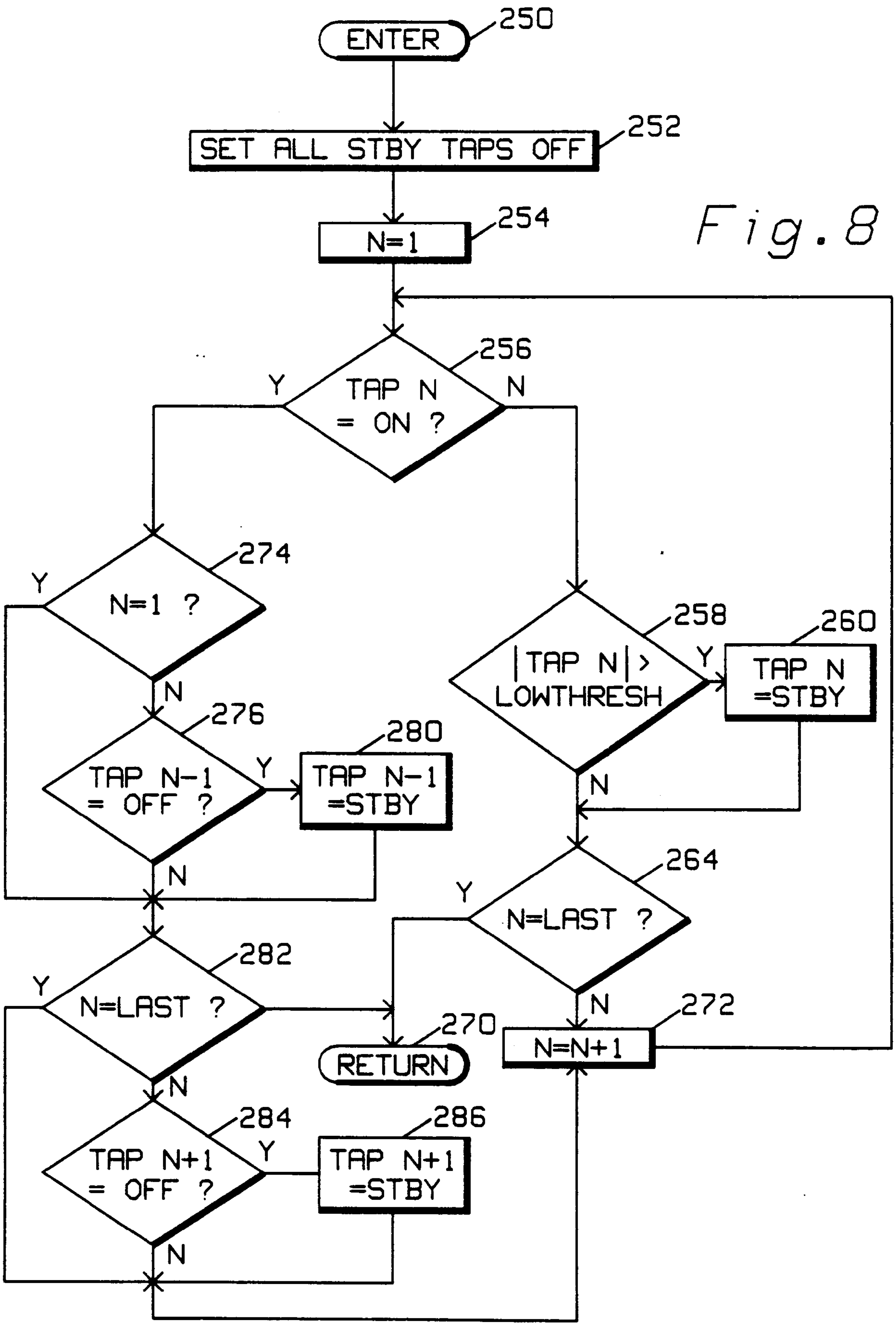
ENTER
250
SET ALL STBY TAPS OFF
252
N=1
254
TAP N = ON ?
256
Y
N
N=1 ?
274
Y
N
TAP N-1 = OFF ?
276
Y
N
TAP N-1 =STBY
280
|TAP N| > LOWTHRESH
258
Y
N
TAP N =STBY
260
N=LAST ?
264
Y
N
N=LAST ?
282
Y
N
RETURN
270
N=N+1
272
TAP N+1 = OFF ?
284
Y
N
TAP N+1 =STBY
286

Fig.8

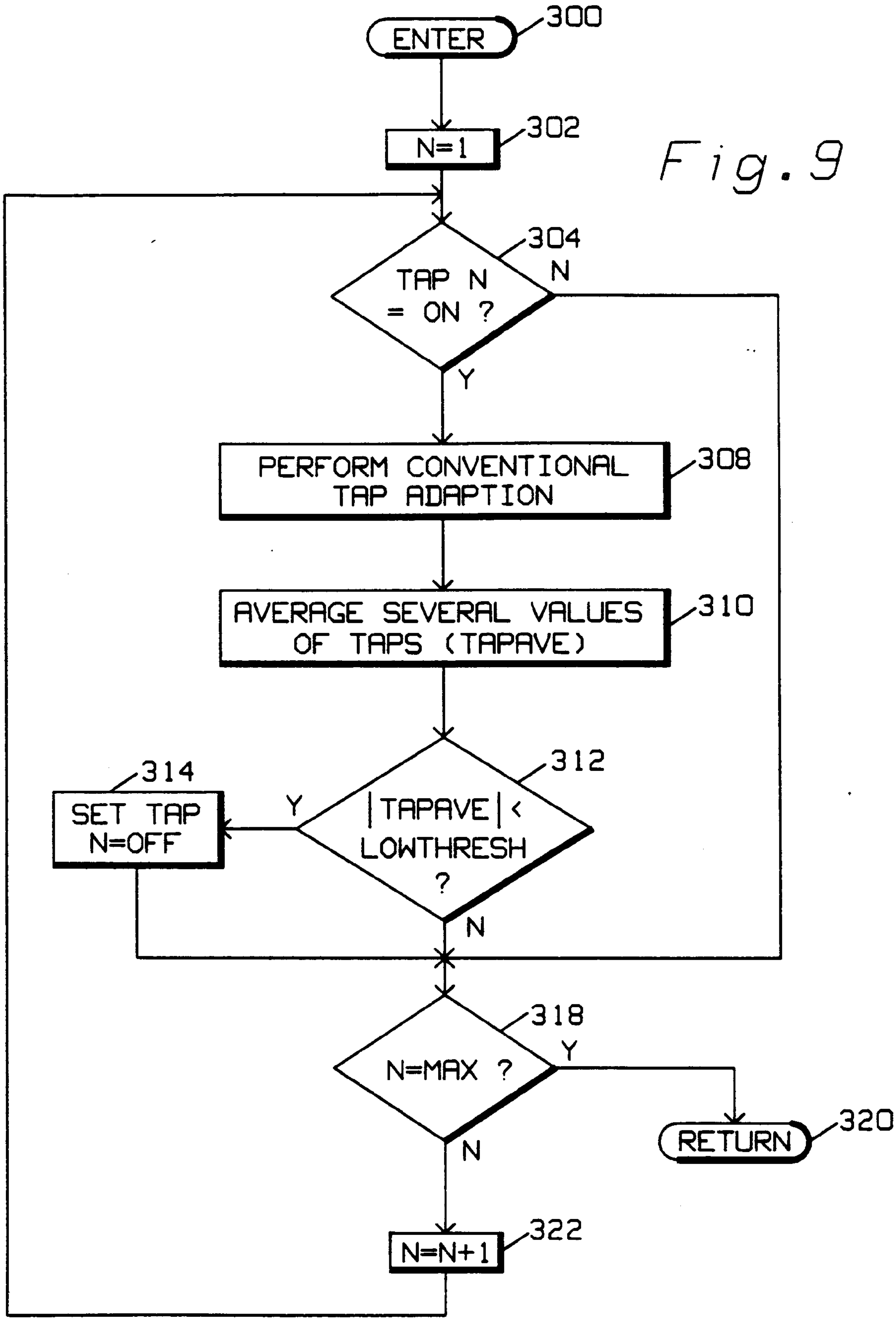
ENTER
300
N=1
302
TAP N
= ON ?
304
N
Y
PERFORM CONVENTIONAL
TAP ADAPTION
308
AVERAGE SEVERAL VALUES
OF TAPS (TAPAVE)
310
314
SET TAP
N=OFF
Y
|TAPAVE| <
LOWTHRESH
?
312
N
N=MAX ?
318
Y
RETURN
320
N
N=N+1
322

Fig. 9

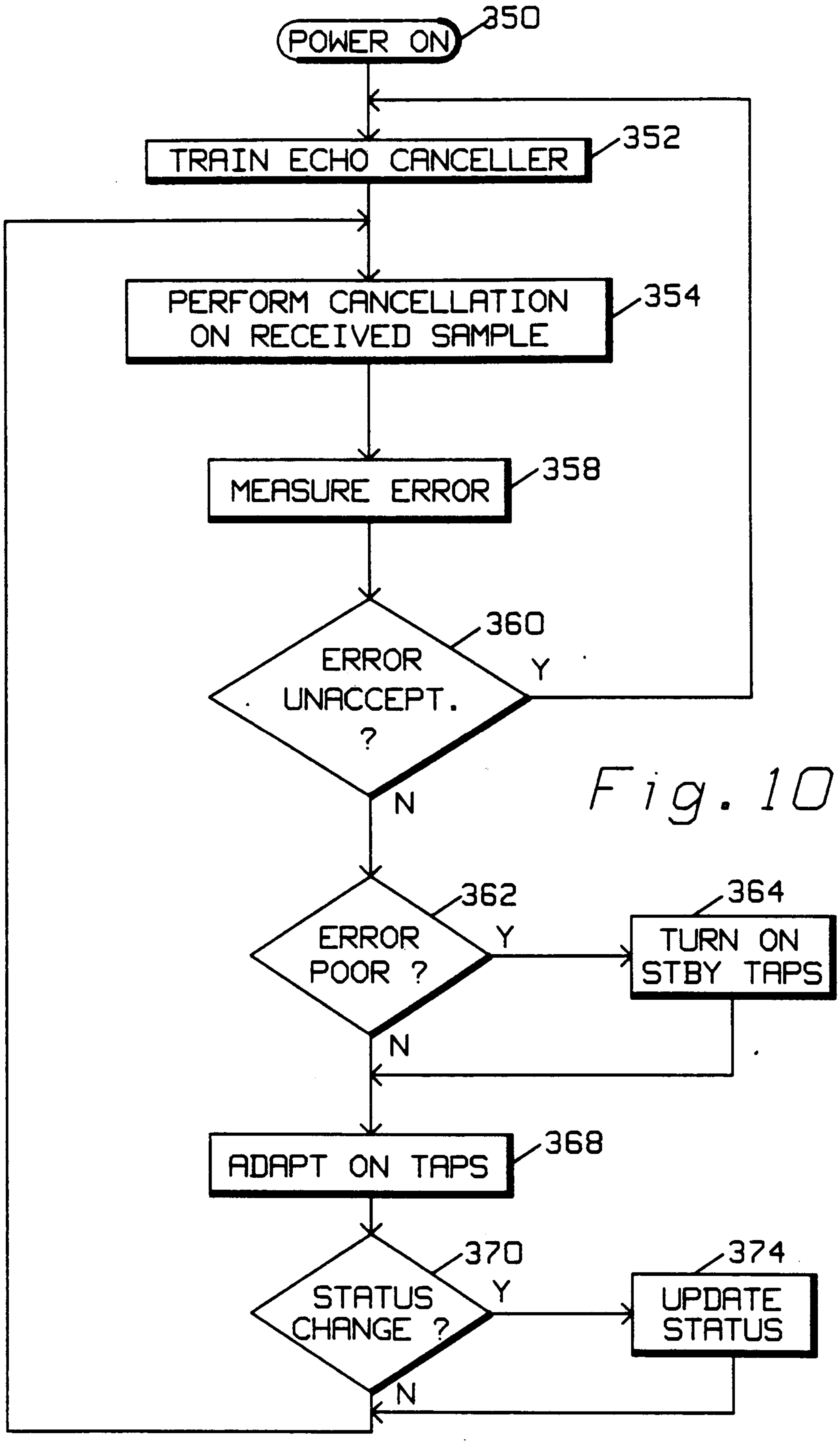
POWER ON
350
TRAIN ECHO CANCELLER
352
PERFORM CANCELLATION ON RECEIVED SAMPLE
354
MEASURE ERROR
358
ERROR UNACCEPT. ?
360
Y
N
ERROR POOR ?
362
Y
N
TURN ON STBY TAPS
364
ADAPT ON TAPS
368
STATUS CHANGE ?
370
Y
N
UPDATE STATUS
374

Fig. 10

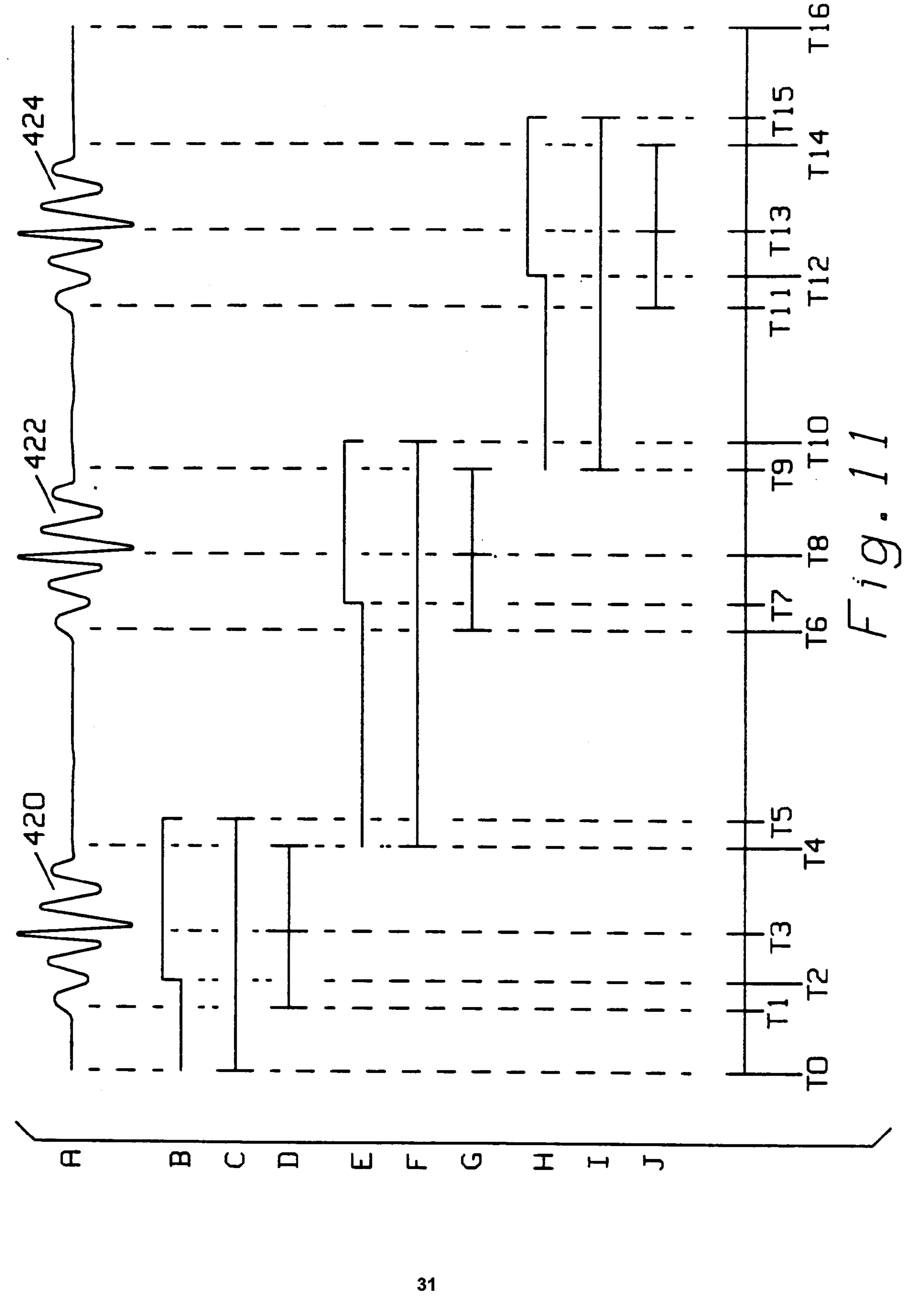
A
B
C
D
E
F
G
H
I
J
420
422
424
T0
T1
T2
T3
T4
T5
T6
T7
T8
T9
T10
T11
T12
T13
T14
T15
T16

Fig. 11

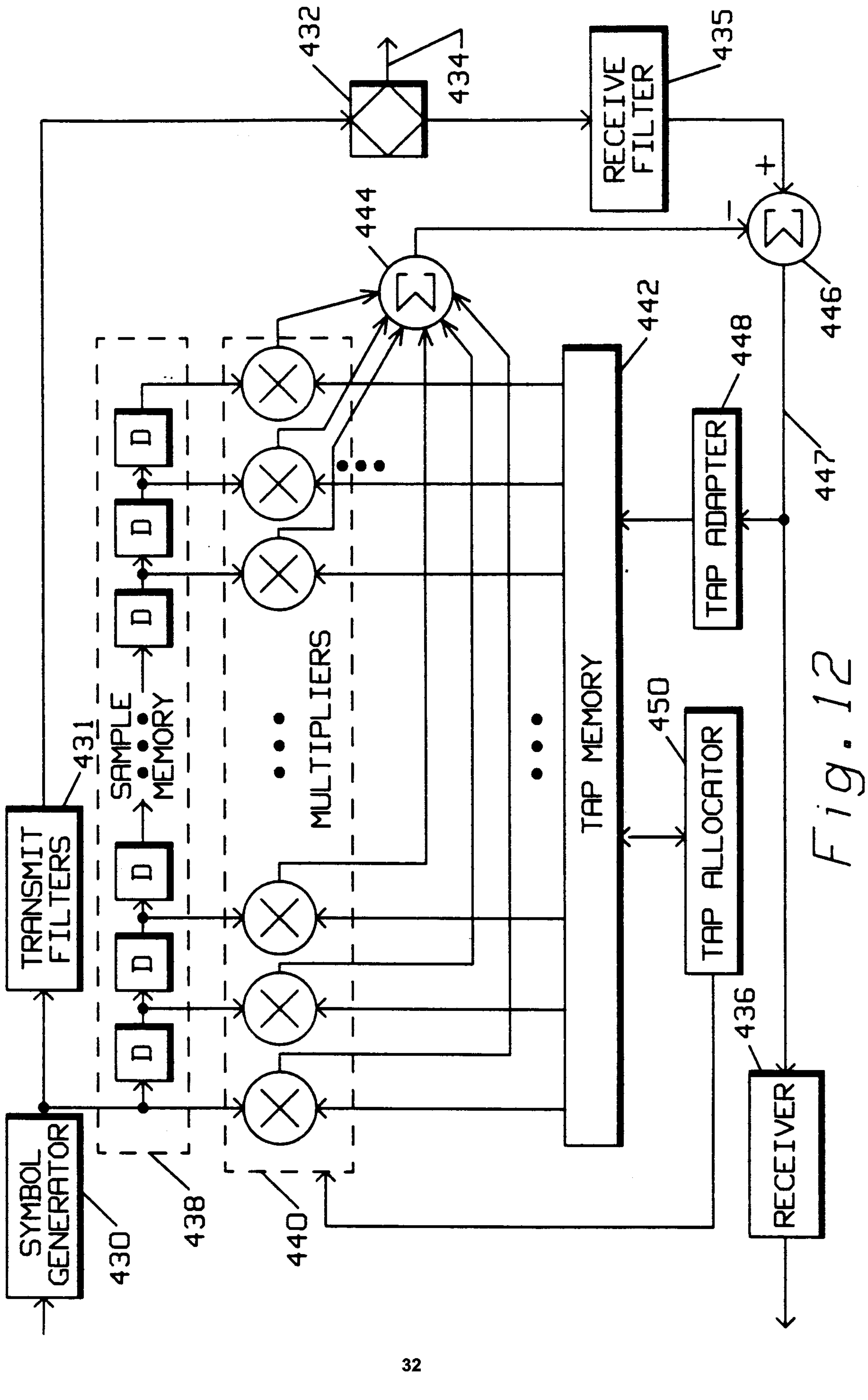
SYMBOL GENERATOR
430
TRANSMIT FILTERS
431
SAMPLE MEMORY
438
D
MULTIPLIERS
440
TAP MEMORY
442
444
432
434
RECEIVE FILTER
435
+
−
446
447
TAP ADAPTER
448
TAP ALLOCATOR
450
RECEIVER
436

Fig. 12

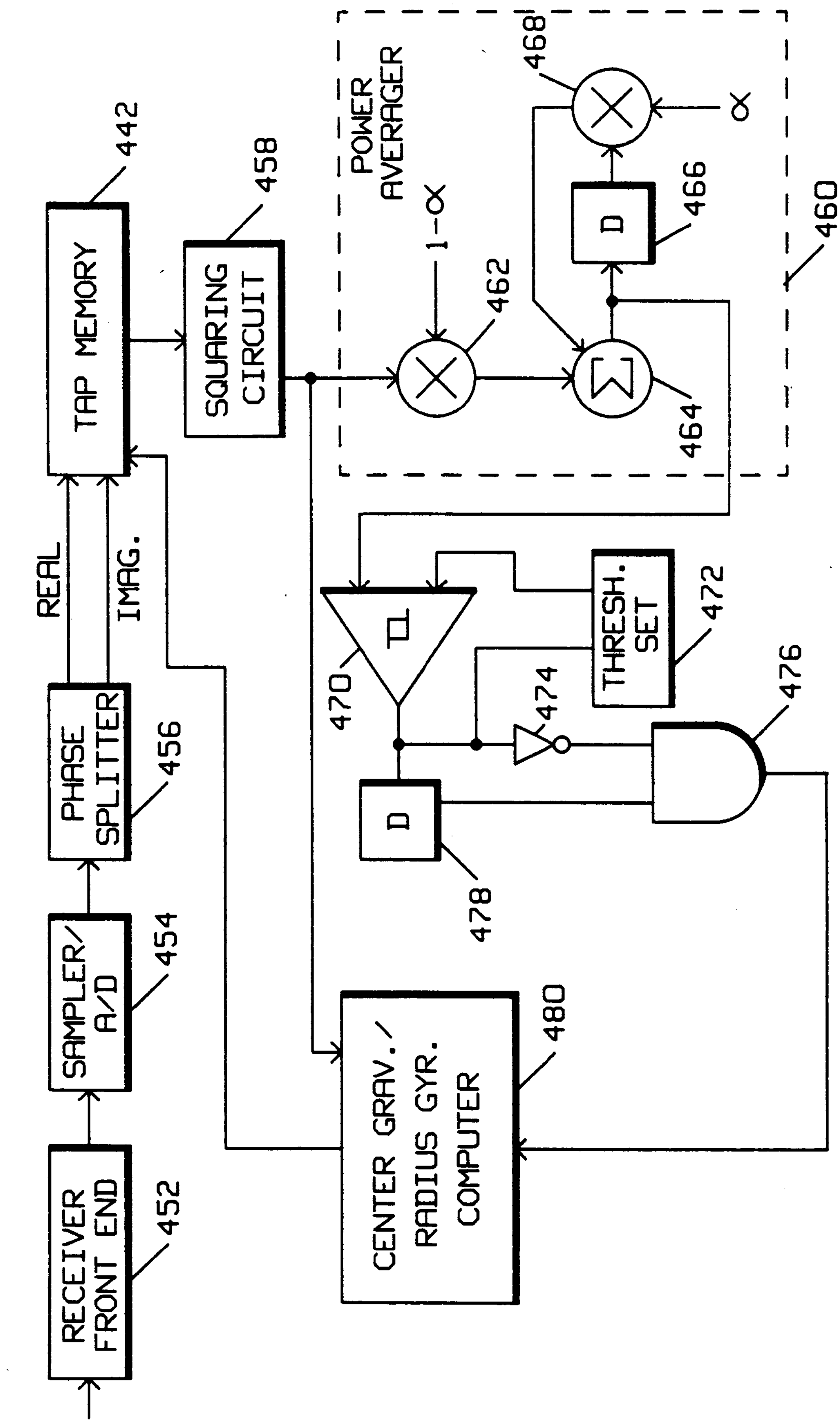
RECEIVER FRONT END
452
SAMPLER/ A/D
454
PHASE SPLITTER
456
REAL
IMAG.
TAP MEMORY
442
SQUARING CIRCUIT
458
POWER AVERAGER
462
1-α
464
466
D
468
α
460
470
472
THRESH. SET
474
476
D
478
CENTER GRAV./ RADIUS GYR. COMPUTER
480

Fig. 13

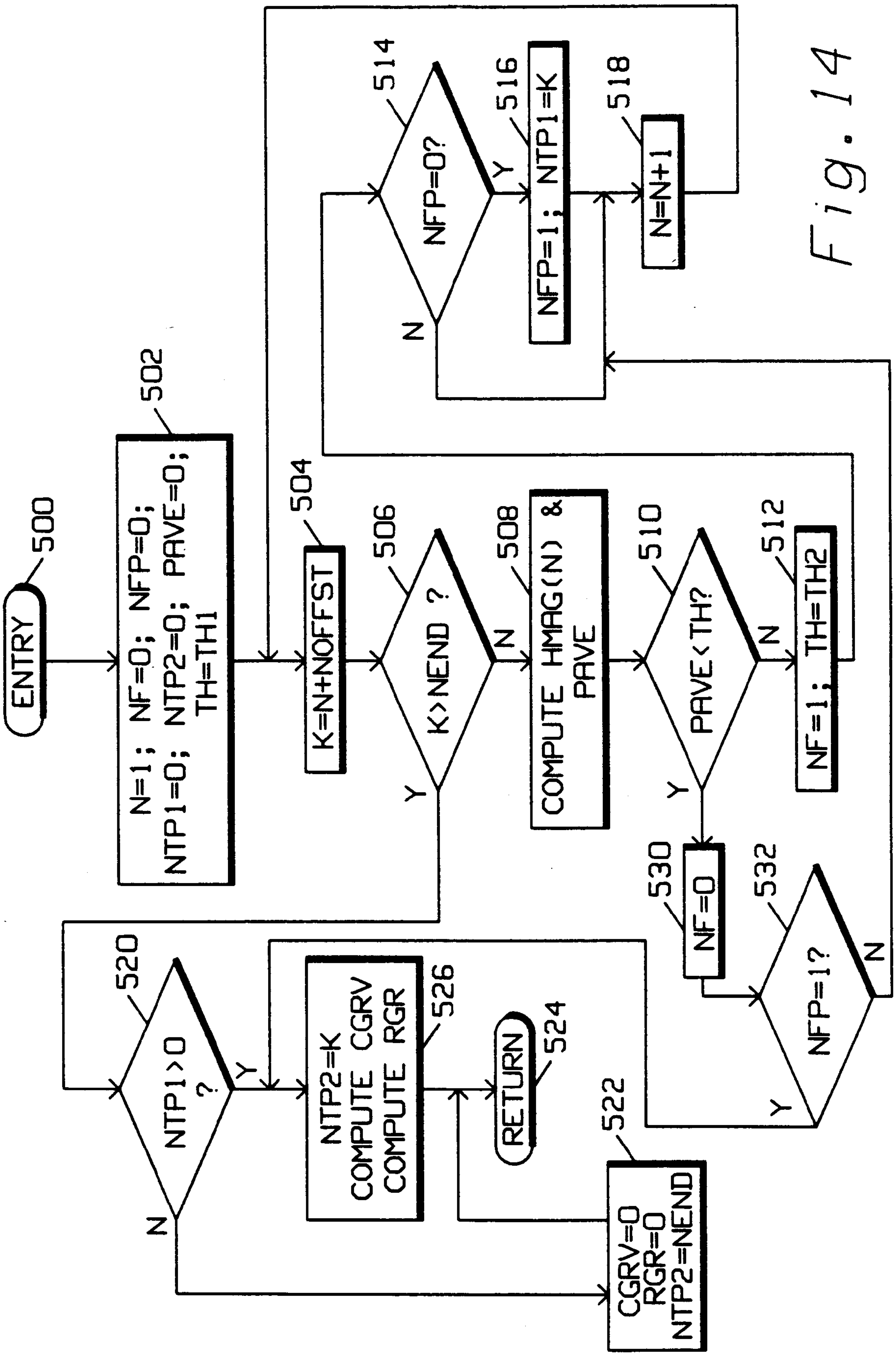
ENTRY
500
N=1; NF=0; NFP=0;
NTP1=0; NTP2=0; PAVE=0;
TH=TH1
502
K=N+NOFFST
504
K>NEND ?
506
COMPUTE HMAG(N) &
PAVE
508
PAVE<TH?
510
NF=1; TH=TH2
512
NFP=0?
514
NFP=1; NTP1=K
516
N=N+1
518
NF=0
530
NFP=1?
532
NTP1>0
?
520
NTP2=K
COMPUTE CGRV
COMPUTE RGR
526
RETURN
524
CGRV=0
RGR=0
NTP2=NEND
522
Y
N

Fig. 14

Fig. 15

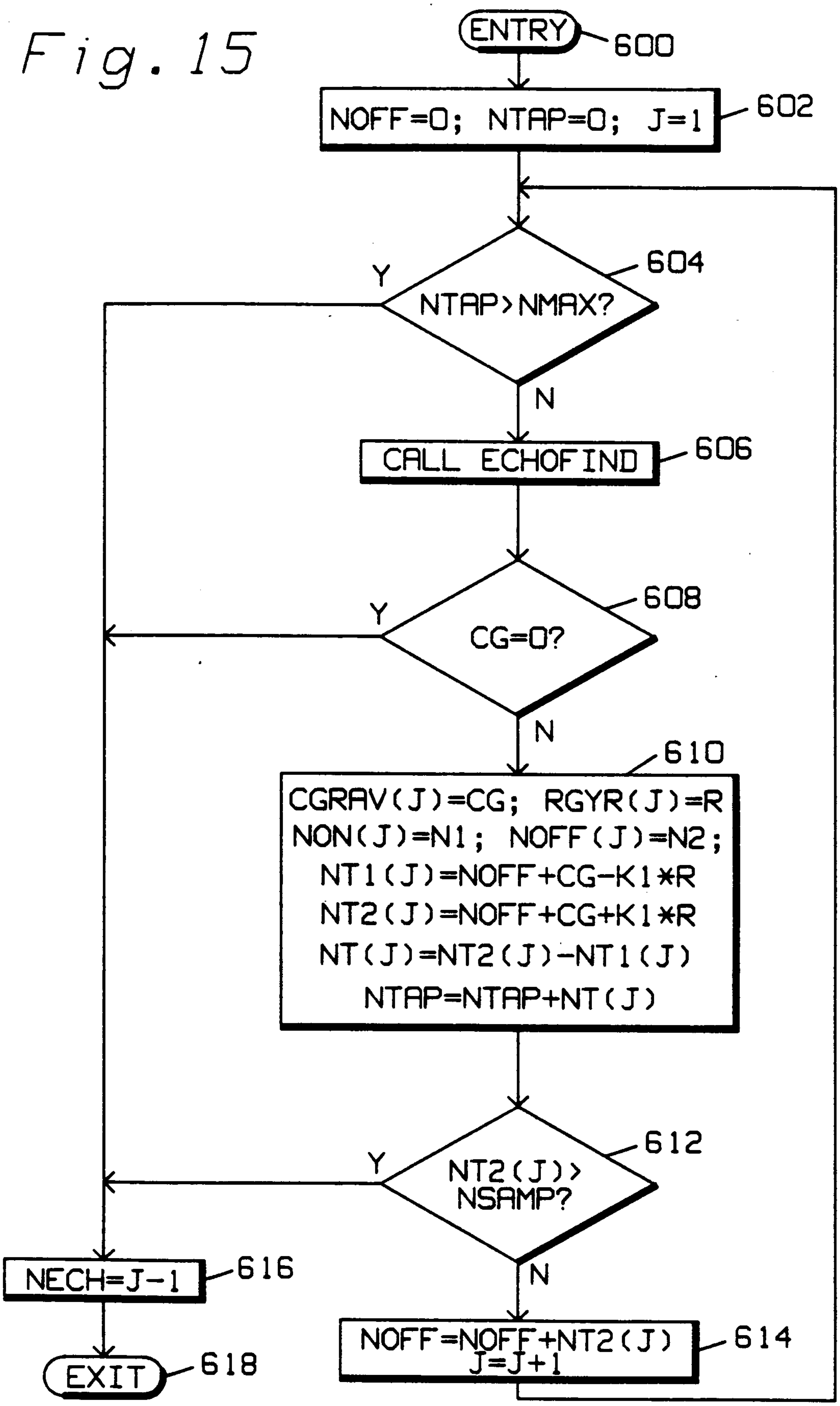
ENTRY
600
NOFF=0; NTAP=0; J=1
602
NTAP>NMAX?
604
Y
N
CALL ECHOFIND
606
CG=0?
608
Y
N
610
CGRAV(J)=CG; RGYR(J)=R
NON(J)=N1; NOFF(J)=N2;
NT1(J)=NOFF+CG-K1*R
NT2(J)=NOFF+CG+K1*R
NT(J)=NT2(J)-NT1(J)
NTAP=NTAP+NT(J)
NT2(J)>
NSAMP?
612
Y
N
NECH=J-1
616
EXIT
618
NOFF=NOFF+NT2(J)
J=J+1
614